# EUROPÄISCHE PATENTSCHRIFT

(11) **EP 3 487 687 B1**
(45) Veröffentlichungstag und Bekanntmachung des Hinweises auf die Patenterteilung: **25.12.2019**
(21) Anmeldenummer: 16741028.1
(22) Anmeldetag: 20.07.2016
(51) Int. Cl.: B29C 64/386, B29C 64/135, B29C 64/264, B29C 64/112

(54) **3D-VERFAHREN ZUM HERSTELLEN VON OBJEKTEN**
3D PRINTING METHOD FOR PRODUCING OBJECTS
PROCÉDÉ D'IMPRESSION 3D POUR PRODUIRE DES OBJETS

(43) Veröffentlichungstag der Anmeldung: 29.05.2019
(73) Patentinhaber: Wacker Chemie AG, 81737 München (DE)
(72) Erfinder: ELLER, Klaus, 84489 Burghausen (DE); PETER, Maximilian, 84503 Altötting (DE)
(74) Vertreter: Bitterlich, Bianca
(86) Internationale Anmeldenummer: PCT/EP2016/067286
(87) Internationale Veröffentlichungsnummer: WO 2018/014948

(56) Entgegenhaltungen:
- WO-A2-2006/020685
- WO-A2-2015/077195
- US-A1- 2015 037 445
- US-A1- 2015 375 453
- US-A1- 2016 023 403

## Beschreibung

Die Erfindung betrifft ein Verfahren zum Herstellen von Objekten unter Einsatz einer 3D-Druckvorrichtung.

### Stand der Technik

Zur Herstellung von Prototypen, Kleinserien oder Einzelstücken von Gegenständen ist aus dem Stand der Technik eine Vielzahl verschiedener generativer Fertigungsverfahren bekannt. Diese auch als 3D-Druck bezeichneten Verfahren haben gemeinsam, dass eine Fertigung von Gegenständen bzw. Objekten direkt auf Basis eines Computermodells erfolgt. Vorteilhaft lassen sich so kostengünstig und einfach kundenspezifische Bauteile anfertigen. Zur Herstellung eines Objekts wird beispielsweise ein Pulver durch Aufbringen eines Härters selektiv verfestigt, wobei der Härter in einem vom herzustellenden Objekt abhängigen Muster auf das Pulver aufgetragen wird. Weitere Verfahren umfassen das Lasersintern, bei dem nach einem vorgegebenen Muster Pulver durch Aufschmelzen mit einem Laser in der gewünschten Form verfestigt wird, sowie Fused Filament Fabrication, bei dem das Objekt schichtweise aus einem schmelzfähigen Kunststoff hergestellt wird. Ebenfalls bekannt sind Verfahren, bei denen Flüssigkeit tröpfchenweise mit Düsen abgegeben und beispielsweise durch Einwirkung von UV-Strahlung ausgehärtet wird.

Die 3D-Druckeinrichtungen unterliegen mechanischen Toleranzen in der Fertigung sowie mechanischem Verschleiß. Mechanische Toleranzen betreffen z. B. die Lage und die Ausrichtung des Druckkopfs zur Druckebene und die Ebenheit der Druckebene. Diese Toleranzen beeinflussen die Qualität des gedruckten Objekts, so dass Fehldrucke auftreten können. Insbesondere bei größeren Objekten oder Bauteilen ergeben sich oft unzureichende Druckbilder.

In DE 10 2012 000 664 A1 wird eine Vorrichtung für den 3D-Druck beschrieben, wobei der Drucktisch zur Einstellung von mechanischen Toleranzen mittels einstellbarer Positionierschrauben in der Ausrichtung zur Druckebene verändert werden kann.

In DE 20 2015 103 932 U1 wird eine Vorrichtung zur Vermessung von Unebenheit einer Trägerplatte beschrieben, auf der ein Objekt generativ erzeugt wird. Dabei ist ein Sensor vorgesehen, der mit einer Extrudiervorrichtung unbeweglich verbunden ist, um die Oberfläche der Trägerplatte oder der zuletzt gedruckten Schicht zu vermessen.

In DE 10 2001 106 614 A1 wird ein 3D-Druckverfahren beschrieben, welches mittels variabler Ausrichtung, Positionierung und Neigung des Drucktisches oder des Bauteilhalters spezielle 3D-Drucke von Überhängen oder freitragenden Elementen durchführt. Dabei wird der Druckkörper durch mehrachsige Aktoren so ausgerichtet, dass die Druckeinrichtung den Druckvoxel senkrecht auf der Druckebene platzieren kann. Die Position der Druckebene ist aus eingegebenen Daten bekannt und wird nicht ermittelt oder verifiziert. Es handelt sich um ein rein gesteuertes und kein geregeltes Verfahren. In US2016/023403 A1 wird ein 3D-Druckverfahren beschrieben, wobei ein räumliches Mapping durchgeführt wird.

Die aus dem Stand der Technik bekannten Geräte weisen Defizite auf, welche die Qualität der gedruckten Teile beeinflussen. Die erzielbare Qualität der Objekte erreicht insbesondere im Falle des Drucks von Silikonmaterial nicht die konstante Qualität vergleichbarer, mittels Spritzguss hergestellter Objekte. Auch ist es bei den bekannten Vorrichtungen und Verfahren nicht möglich, eine gleichbleibende Qualität des Endproduktes sicherzustellen, wie es für den industriellen Einsatz der hergestellten Objekte unabdingbar ist.

Eine Aufgabe der Erfindung ist es, ein verbessertes Verfahren zur generativen Fertigung von Objekten bereitzustellen, mit denen Objekte hoher Qualität, z. B. in Bezug auf Oberfläche und Formtreue, herstellbar sind.

### Offenbarung der Erfindung

Es wird eine 3D-Druckvorrichtung zur Herstellung von Objekten im 3D-Druckverfahren vorgeschlagen, mit zumindest einem Druckkopf, der zumindest eine Austragevorrichtung aufweist, die eingerichtet ist, um Druckmassen an Soll-Positionen zu setzen, um Objekte generativ zu erzeugen, wobei die 3D-Druckvorrichtung ein System mit zumindest einer konfokalen Messvorrichtung aufweist, das dazu eingerichtet ist, berührungslos einen Abstand des Druckkopfs zu einer Oberfläche zu bestimmen, auf der zu druckende Druckmassen gedruckt werden können.

Aus dem Abstand des Druckkopfs zu der Oberfläche, auf der die zu druckenden Druckmassen gedruckt werden können, und aus der Position des Druckkopfs ist die Position eines Punkts auf der Oberfläche bestimmbar, an dem eine Druckmasse abgelegt werden kann.

Die 3D-Druckvorrichtung umfasst typischerweise eine Basisplatte, auf der das Objekt durch Austragen von Druckmasse aus der mindestens einen Austragevorrichtung des mindestens einen Druckkopfs aufgebaut wird. Basisplatte und Druckkopf werden hierbei relativ zueinander bewegt, wobei Relativbewegungen in allen drei Raumrichtungen X, Y und Z möglich sind. Hierzu kann beispielsweise der Druckkopf derart angeordnet sein, dass dieser in X- und Y-Richtung beweglich ist und die Basisplatte kann derart angeordnet sein, dass diese in Z-Richtung beweglich ist. Auch weitere Konfigurationen sind hierbei denkbar, beispielsweise kann die Basisplatte in Y-Richtung beweglich angeordnet werden und der Druckkopf kann derart angeordnet werden, dass dieser in X- und Z-Richtung beweglich ist. Alternativ oder zusätzlich hierzu kann vorgesehen sein, die Basisplatte und/oder den Druckkopf schwenkbar auszugestalten, so dass beliebige Raumanordnungen möglich sind.

Um mit den ausgetragenen Druckmassen ein Objekt aufzubauen, werden die Druckmassen gemäß einem vorgegebenen Schema auf der Basisplatte abgelegt, wobei eine erste Materialschicht ausgebildet wird. Nach dem Ausbilden der ersten Materialschicht wird z. B. der Abstand zwischen der Austragevorrichtung und der Basisplatte vergrößert und es wird die nächste Materialschicht ausgebracht. Es folgen weitere Materialschichten, die jeweils nach einem vorgegebenen Schema abgelegt werden, bis das gewünschte Objekt fertiggestellt ist. Dies wird auch als generative Erzeugung des Objekts bezeichnet.

Das Austragen der Druckmassen erfolgt nach einem Schema, welches aus einer Vorlage abgeleitet wird. Die Vorlage wird mit einer CAD-Software (Computer-Aided Design, rechnerunterstütztes Konstruieren) entworfen oder wird durch dreidimensionales Scannen eines Gegenstands erstellt. Zur Ableitung des Schemas für den Materialaustrag berechnet die Software typischerweise horizontale Schnitte der Vorlage, wobei jeder dieser Schnitte einer Materialschicht entspricht. Im Anschluss wird berechnet, wie die Druckmassen in der jeweiligen Schicht platziert werden müssen. Hierbei wird berücksichtigt, ob der Austrag der Druckmassen in Form von Voxeln, in Form von Strängen oder in einer Kombination aus Voxeln und Strängen erfolgt.

Gegebenenfalls wird beim Ableiten des Schemas auch das Setzen von Stützmaterial eingeplant. Das Setzen von Stützmaterial kann erforderlich sein, wenn das herzustellende Objekt Hohlräume, Hinterschnitte, überhängende, freitragende oder dünnwandige Teile aufweisen soll, da die Druckmassen nicht frei im Raum schwebend gesetzt werden können. Das Stützmaterial füllt während des Druckprozesses Raumvolumina aus und dient als Basis oder als Gerüst, um darauf die Druckmassen setzen und aushärten zu können. Das Stützmaterial wird nach Beendigung des Druckprozesses wieder entfernt und gibt die Hohlräume, Hinterschnitte sowie überhängenden, freitragenden oder dünnwandigen Partien des Objekts frei. In der Regel wird als Stützmaterial ein von dem Material des zu druckenden Objekts abweichendes Material verwendet, z. B. nicht vernetzendes und nicht kohäsives Material. Abhängig von der Geometrie des Objekts wird die notwendige Form des Stützmaterials berechnet. Bei der Berechnung der Form des Stützmaterials können verschiedene Strategien eingesetzt werden, um beispielsweise möglichst wenig Stützmaterial zu verwenden oder um die Maßhaltigkeit des Produktes zu erhöhen.

Die Austragevorrichtung ist eingerichtet, in Richtung der Austragsachse Druckmassen in Form einzelner isolierter Tropfen, als Tropfenreihe oder in Form eines Strangs abzugeben. Fließende Übergänge zwischen diesen Formen sind möglich. Im Rahmen dieser Beschreibung wird ein aus der Austragevorrichtung ausgetragener und auf der Basisplatte bzw. auf dem Objekt gesetzter Tropfen einer Druckmasse als Voxel bezeichnet. Mit Strang wird sowohl ausgetretene und noch nicht gesetzte als auch gesetzte Druckmasse in Strangform bezeichnet. Unter einer gesetzten Druckmasse wird sowohl ein Voxel als auch ein Strang verstanden.

Zur Abgabe einzelner Tropfen kann die Austragevorrichtung eine oder mehrere Düsen umfassen, die Flüssigkeitstropfen aus Druckmasse in Richtung der Basisplatte emittieren, ähnlich wie es die Düsen eines Tintenstrahldruckers tun. Daher werden diese Düsen auch als Jetting-Düsen bezeichnet.

Zur Abgabe von Strängen aus Druckmasse wird die Druckmasse mittels Druckbeaufschlagung eines Vorratsbehälters, z.B. aus einer Kartusche, Spritze oder einem Fass, durch eine Düse als Strang herausgepresst und auf der Basisplatte zum Objekt selektiv abgeschieden. Derartige Austragevorrichtungen werden im Rahmen dieser Beschreibung als Dispenser bezeichnet.

Es können mehrere, auch technisch unterschiedliche Austragevorrichtungen für verschiedene Druckmassen in der 3D-Druckvorrichtung vorgesehen sein. So kann die 3D-Druckvorrichtung eine oder mehrere ggf. unterschiedlich ausgestaltete oder unterschiedlich betriebene Jetting-Düsen und/oder einen oder mehrere ggf. unterschiedlich ausgestaltete oder unterschiedlich betriebene Dispenser aufweisen. Die Austragevorrichtung kann auch Düsen- oder Dispenserarrays aufweisen, die mehrere Tropfen bzw. Stränge gleichzeitig abgeben können.

Insbesondere kann ein Druckkopf mehrere verschiedene Austragevorrichtungen aufweisen, z.B. eine oder mehrere Jetting-Düsen und/oder einen oder mehrere Dispenser. Hierbei können beispielsweise über den oder die Dispenser schnell die Druckmassen im Inneren des Objekts gesetzt werden und mit der oder den Jetting-Düsen in hoher Qualität die Oberfläche des Objekts hergestellt werden. Alternativ ist es denkbar, dass der Druckkopf mehrere gleichartige Austragevorrichtungen umfasst. Hierdurch können beispielsweise mehrere Objekte gleichzeitig generativ hergestellt werden oder es kann mit mehreren Austragevorrichtungen parallel an dem Aufbau eines einzelnen Objekts gearbeitet werden. In beiden Fällen wird die insgesamt erforderliche Druckdauer reduziert.

Die jeweilige Austragevorrichtung weist eine Austragsachse auf, die die Richtung angibt, in die Material aus der Austragevorrichtung ausgetragen wird. Üblicherweise ist die Austragsachse derart mit Bezug zur Basisplatte orientiert, dass diese senkrecht zur Basisplatte steht. Optional kann vorgesehen sein, dass die 3D-Druckvorrichtung derart konfiguriert ist, dass auch die Ausrichtung der Austragsachse relativ zur Basisplatte verändert werden kann.

Bevorzugt weist der Druckkopf eine oder mehrere Jetting-Düsen auf. Die Jetting-Düsen sind derart eingerichtet, dass diese, auf Anforderung, kontrolliert einen Tropfen abgeben.

Es kann beispielsweise ein Heizelement in der Jetting-Düse vorgesehen sein, mit dem die Druckmasse erhitzt wird und ein Tropfen von einer entstehenden Dampfblase aus der Jetting-Düse getrieben wird, dies ist als Bubble-Jet bekannt.

Eine weitere Möglichkeit ist das Anordnen eines Piezoelements, welches sich aufgrund einer elektrischen Spannung verformt und hierdurch einen Tropfen aus einer Jetting-Düse pressen kann. Derartige Tintenstrahldruckverfahren sind dem Fachmann aus dem klassischen Druck und aus dem sogenannten 3D-Druck, bei dem aus einer fotopolymerisierbaren Tinte dreidimensionale Gegenstände schichtweise aufgebaut werden, grundsätzlich bekannt. Derartige Druckköpfe, wie sie im Tintenstrahldruck oder in Multijet-3D-Druck eingesetzt werden, können auch niederviskose Drucktinten bzw. Druckmassen dosieren, z.B. solche mit Viskositäten unter 50 mPa·s.

In den Druckköpfen in dem erfindungsgemäßen Verfahren werden bevorzugt Austragevorrichtungen eingesetzt, die auf Jet-Ventilen mit Piezoelementen basieren. Diese ermöglichen das Austragen sowohl niedrigviskoser Materialien, wobei Tropfenvolumen für Tropfen von einigen wenigen Pikolitern (pL) (2 pL entsprechen einem Tropfendurchmesser von ca. 0,035 µm) realisiert werden können, als auch mittel- und hochviskoser Materialien wie insbesondere Silikonkautschukmassen, wobei Piezo-Druckköpfe mit einem Düsendurchmesser zwischen 50 und 500 µm bevorzugt werden und Tropfenvolumen im Nanoliter-Bereich (1 bis 100 nL) erzeugt werden können. Mit niedrigviskosen Massen (< 100 mPa·s) können diese Druckköpfe Tröpfchen mit sehr hoher Dosierfrequenz abgeben (ca. 1 - 30 kHz), während mit höherviskosen Massen (> 100 Pa·s) in Abhängigkeit von den rheologischen Eigenschaften (scherverdünnendes Verhalten) Dosierfrequenzen bis zu ca. 500 Hz erzielt werden können. Geeignete Jetting-Düsen werden beispielsweise in DE 10 2011 108 799 A1 beschrieben.

Bei bevorzugten Ausführungsformen der Jetting-Düsen kann beim Austrag der Druckmasse das Volumen des Tropfens beeinflusst werden, so dass Tropfen unterschiedlicher Größe erzeugt werden können. Alternativ oder zusätzlich hierzu kann vorgesehen sein, dass einige Jetting-Düsen, z.B. eines Düsenarrays, mit unterschiedlichen Düsengrößen ausgestaltet sind. Mit kleinen Tropfen lassen sich genauere Kannten erzeugen und z. B. ein Oberflächenfinish an den Seitenflächen des Objekts nach einem Drehen des Objekts durchführen.

In einem Dispenser erfolgt der Druckaufbau z.B. mittels Luftdruck oder mechanisch, z.B. durch einen kleinen Extruder, mittels einer Kolbenpumpe oder mittels einer Exzenterschnecke. Verschiedene Ausführungsformen sind dem Fachmann bekannt.

Im Fall einer Jetting-Düse als Austragevorrichtung wird durch eine Steuereinrichtung vorgegeben, wann die Jetting-Düse einen Voxel austrägt. Des Weiteren kann vorgesehen sein, dass durch die Steuereinrichtung die Größe des Voxels vorgegeben wird. Es kann vorgesehen sein, dass in Abhängigkeit der Messergebnisse der konfokalen Messeinrichtung die Parameter der Jetting-Düse, welche die Voxelgröße beeinflussen, angepasst werden. Derartige Parameter können z. B. die Öffnungszeiten des Jettingventils umfassen, oder, falls die Düse Stößeltechnik aufweist, eine Stößelhubgeschwindigkeit, Stößelrückzugsgeschwindigkeit, und den Stößelhub. Die Parameter der Jetting-Düse, welche die Voxelgröße beeinflussen, können auch bei einem etwaigen Nachdruck fehlerhaft nicht-gesetzter Voxel, z. B. beim Auffüllen von Fehlstellen kurzfristig angepasst werden, um den Nachdruck zu optimieren.

Im Fall eines Dispensers als Austragevorrichtung wird durch die Steuereinrichtung vorgegeben, wann der Dispenser mit dem Austragen von Druckmasse in Form eines Strangs beginnt und wann das Austragen beendet wird. Des Weiteren kann vorgesehen sein, dass der Volumenstrom, also der Druckmassenvolumenaustrag pro Zeiteinheit, durch die Steuereinrichtung vorgegeben wird. Es kann vorgesehen sein, in Abhängigkeit der Messergebnisse der konfokalen Messeinrichtung die Parameter des Dispensers, welche die Strangform beeinflussen, anzupassen, um die Druckqualität zu erhöhen. Derartige Parameter des Dispensers können die Durchflussrate, Zuführergeschwindigkeit und den Vordruck im Materialspeicher umfassen.

Wird Stützmaterial eingesetzt, so kann der Druckkopf eine oder mehrere weitere Austragevorrichtungen für das Stützmaterial aufweisen. Alternativ oder zusätzlich kann für das Austragen von Stützmaterial auch ein weiterer Druckkopf mit entsprechenden Austragevorrichtungen vorgesehen sein.

Die Druckmasse kann Masse zur Erzeugung eines dauerhaften Bauteils sein, insbesondere Silikon, oder sie kann Stützmaterial sein, das für temporär erzeugte Teile oder Bereiche benötigt wird, insbesondere in Form von z. B. Polyethylenglycol (PEG) oder Polyvinylalkohol (PVAL).

Bei der verwendeten Druckmasse handelt es sich bevorzugt um ein Material, welches zumindest während der Verarbeitung in einer fließfähigen Form vorliegt und nach dem Austrag ausgehärtet werden kann. Durch die nachträgliche Aushärtbarkeit kann bei Feststellung eines Fehldrucks ein Prozess wie beispielsweise eine Reinigung des Druckkopfes gefolgt von einem Nachdruck fehlerhaft nicht-gesetzter Druckmassen durchgeführt werden, wobei die unvernetzten Materialien bis zur ihrer Aushärtung fließfähig bleiben, so dass die nachträglich gesetzten Druckmassen sich noch mit den vor der Reinigung gesetzten Druckmassen verbinden können.

Bevorzugt ist vorgesehen, dass eine Aushärtung der Druckmassen mittels Strahlung oder Wärmeeinwirkung erfolgt, besonders bevorzugt ortsselektiv oder flächig mittels Strahlung oder Wärmeeinwirkung. Bevorzugt werden Druckmassen eingesetzt, die sich nach dem Setzen durch Einwirkung von Strahlung oder Wärme aushärten lassen.

Beispielsweise wird bei dem vorgeschlagenen Verfahren eine Druckmasse eingesetzt, die sich durch Einwirkung von aktinischer Strahlung aushärten lässt, bevorzugt durch Einwirkung von UV/VIS-Strahlung. UV-Strahlung bzw. UV-Licht weist eine Wellenlänge im Bereich von 100 nm bis 380 nm auf, während sichtbares Licht (VIS-Strahlung) eine Wellenlänge im Bereich von 380 bis 780 nm aufweist.

In dem erfindungsgemäßen Verfahren werden als Druckmasse Silikonkautschukmassen verwendet, die durch UV/VIS-induzierte Additionsreaktion vernetzen. Gegenüber einer thermischen Vernetzung hat die UV/VIS-induzierte Vernetzung Vorteile. Zum einen können Intensität, Einwirkungszeit und Einwirkungsort der UV/VIS-Strahlung genau bemessen werden, während das Aufheizen der ausgetragenen Druckmasse (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silikone führen die bei thermischer Vernetzung zwangsläufig vorhandenen Temperaturgradienten zu mechanischen Spannungen, welche die Maßhaltigkeit des gebildeten Objekts negativ beeinflussen, was im Extremfall zu inakzeptablen Formverzerrungen führen kann.

UV/VIS-induzierte Additions-vernetzende Silikonkautschukmassen werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VIS-induzierte Aktivierung eines lichtempfindlichen Hydrosylierungskatalysators zustande, wobei Komplexe des Platins bevorzugt sind. Aus dem Stand der Technik sind zahlreiche lichtempfindliche Platinkatalysatoren bekannt, die unter Lichtausschluss weitgehend inaktiv sind und durch Bestrahlung mit Licht mit einer Wellenlänge von 250-500 nm in bei Raumtemperatur aktive Platin-Katalysatoren überführt werden können. Beispiele hierfür sind (η-Diolefin)(σ-aryl)-Platinkomplexe (EP 0 122 008 A1; EP 0 561 919 B1), Pt(II)-β-diketonatkomplexe (EP 0 398 701 B1) und (η5-Cyclopentadienyl)tri(σ-alkyl)Platin(IV)-Komplexe (EP 0 146 307 B1, EP 0 358 452 B1, EP 0 561 893 B1). Besonders bevorzugt sind MeCpPtMe₃ sowie die sich davon durch Substitution der am Platin befindlichen Gruppen ableitenden Komplexe, wie beispielsweise beschrieben in EP 1 050 538 B1 und EP 1 803 728 B1. Die UV/VIS-induziert vernetzenden Druckmassen können ein- oder mehrkomponentig formuliert werden.

Die Geschwindigkeit der UV/VIS-induzierten Additionsvernetzung hängt von zahlreichen Faktoren ab, insbesondere von der Art und Konzentration des PlatinKatalysators, von der Intensität, Wellenlänge und Einwirkungszeit der UV/VIS-Strahlung, der Transparenz, Reflektivität, Schichtdicke und Zusammensetzung der Silikonkautschukmasse und der Temperatur.

Der Platin-Katalysator wird vorzugsweise in einer katalytisch ausreichenden Menge eingesetzt, so dass eine hinreichend schnelle Vernetzung bei Raumtemperatur ermöglicht wird. Vorzugsweise werden 0,1 bis 500 Gew.-ppm des Katalysators bezogen auf den Gehalt des Pt-Metalls zur gesamten Silikonkautschukmasse verwendet, vorzugsweise 0,5 bis 200 Gew.-ppm, besonders bevorzugt 1 bis 50 Gew.-ppm.

Für die Aushärtung der UV/VIS-induziert additions-vernetzenden Silikonkautschukmasse wird bevorzugt Licht der Wellenlänge 240 bis 500 nm, weiter bevorzugt 250 bis 400 nm, besonders bevorzugt 350 bis 400 nm, insbesondere bevorzugt 365 nm eingesetzt. Um eine rasche Vernetzung zu erzielen, worunter eine Vernetzungszeit bei Raumtemperatur von weniger als 20 min, vorzugsweise weniger als 10 min, besonders bevorzugt weniger als 1 min verstanden werden soll, empfiehlt sich die Verwendung einer UV/VIS-Strahlungsquelle mit einer Leistung zwischen 10 mW/cm² und 20.000 mW/cm², bevorzugt zwischen 30 mW/cm² und 15.000 mW/cm², sowie eine Strahlungsdosis zwischen 150 mJ/cm² und 20.000 mJ/cm², bevorzugt zwischen 500 mJ/cm² und 10.000 mJ/cm². Im Rahmen dieser Leistungs- und Dosis-Werte lassen sich flächenspezifische Bestrahlungszeiten zwischen maximal 2.000 s/cm² und minimal 8 ms/cm² realisieren.

Werden Druckmassen eingesetzt, die unter UV/VIS-Einwirkung aushärten, so weist die 3D-Druckvorrichtung bevorzugt eine UV/VIS-Belichtungseinheit auf. Bei ortsselektiver Belichtung ist die UV/VIS-Quelle relativ zur Basisplatte beweglich angeordnet und beleuchtet nur ausgewählte Bereiche des Objekts. Bei einer flächigen Belichtung ist die UV/VIS-Quelle in einer Variante derart ausgestaltet, dass das gesamte Objekt bzw. eine gesamte Materialschicht des Objekts auf einmal belichtet wird. In einer bevorzugten Variante ist die UV/VIS-Quelle derart ausgebildet, ihre Lichtstärke oder ihre Energie variabel eingestellt werden kann und dass die UV/VIS-Quelle zur gleichen Zeit nur einen Teilbereich des Objekts belichtet, wobei die UV/VIS-Quelle derart relativ zu dem Objekt bewegt werden kann, dass das gesamte Objekt mit dem UV/VIS-Licht, ggf. in unterschiedlicher Intensität, belichtet werden kann. Beispielsweise ist die UV/VIS-Quelle hierzu als UV/VIS-LED Leiste ausgestaltet und wird relativ zu dem Objekt, bzw. über das gedruckte Objekt bewegt.

Im Fall von mittels Wärmeeinwirkung aushärtender Druckmassen kann eine Infrarotlicht-Quelle (IR) eingesetzt werden, um eine ortsselektive oder flächige Wärmebehandlung durchzuführen.

Für das Durchführen der Aushärtung wird eine Aushärtestrategie verwendet. Bevorzugt erfolgt eine Aushärtung der Druckmassen nach dem Setzen einer Schicht von Druckmassen, nach dem Setzen mehrerer Schichten von Druckmassen oder direkt während des Drucks.

Ein Aushärten der Druckmassen direkt während des Drucks wird als direkt-Aushärtestrategie bezeichnet. Werden durch UV/VIS-Strahlung aushärtbare Druckmassen verwendet, so ist dann im Vergleich zu anderen Aushärtestrategien die UV/VIS-Quelle sehr lange aktiv, so dass mit sehr viel geringerer Intensität gearbeitet werden kann, was zu einem langsamen Durchvernetzen des Objekts führt. Dies begrenzt die Erwärmung des Objekts und führt zu maßhaltigen Objekten, da keine Ausdehnung des Objekts aufgrund von Temperaturspitzen auftritt.

Bei der Pro-Layer-Aushärtestrategie erfolgt nach dem Setzen jeder vollständigen Materialschicht die strahlungsinduzierte Vernetzung der gesetzten Materialschicht. Während dieses Vorgangs verbindet sich die frisch gedruckte Schicht mit der ausgehärteten darunterliegenden gedruckten Schicht. Das Aushärten erfolgt nicht sofort nach dem Setzen einer Druckmasse, so dass die Druckmassen vor dem Aushärten Zeit haben, zu relaxieren. Hiermit ist gemeint, dass die Druckmassen ineinander fließen können, wodurch eine glattere Oberfläche als bei der Direkt-Aushärtestrategie erzielt wird.

Bei der n-Layer-Aushärtestrategie wird ähnlich wie bei der Pro-Layer-Aushärtestrategie verfahren, jedoch wird das Aushärten erst nach dem Setzen von n Materialschichten vorgenommen, wobei n eine natürliche Zahl ist. Die für das Relaxieren der Druckmassen zur Verfügung stehende Zeit wird weiter erhöht, wodurch sich die Oberflächengüte weiter verbessert. Aufgrund des Fließens der Druckmassen kann die erzielbare Kantenschärfe jedoch abnehmen.

In einer bevorzugten Ausführungsform wird die Aushärtestrategie mit dem Nachdrucken fehlerhaft nicht-gesetzter Druckmassen abgestimmt. Beispielsweise kann jeweils nach dem Drucken einer Materialschicht das Nachdrucken fehlerhaft nicht-gesetzter Druckmassen erfolgen, bevor die Vernetzung der gesetzten Materialschicht nach der Pro-Layer-Aushärtestrategie bzw. n-Layer-Aushärtestrategie erfolgt. Fehlerhaft nicht-gesetzte Druckmassen können beispielsweise dadurch erkannt werden, dass eine Positionsmesseinrichtung die Verfahrwege des Druckkopfes ermittelt, ggf. laufend ermittelt, dass der Austrag der Druckmasse aus der Austragevorrichtung überwacht wird und/oder dass ausgetragene Druckmasse vermessen wird.

Die 3D-Druckvorrichtung weist ein System mit einer konfokalen Messvorrichtung auf, das dazu eingerichtet ist, berührungslos den Abstand des Druckkopfs zu der Oberfläche zu bestimmen, auf der zu druckende Druckmassen gedruckt werden können. Das System ist dazu eingerichtet, eine chromatisch-konfokale Abstandsmessung durchzuführen.

Allgemein umfasst das System hierzu einen oder mehrere Sensoren und Auswerteeinheiten. Die konfokale Messvorrichtung wird auch als Sensor des Systems bezeichnet. Die Sensoren nehmen Messwerte auf, die von der Auswerteeinheit ausgewertet werden.

Das System umfasst eine Lichtquelle. Die Lichtquelle ist bevorzugt als Punktlichtquelle realisiert, beispielsweise mittels einer Lochblende mit wenigen Mikrometern Durchmesser oder mittels eines Lichtwellenleiters. Sie sendet polychromatisches Licht auf die Linsenanordnung, z. B. breitbandiges Weißlicht mit hoher Intensität und gleichmäßiger spektraler Verteilung.

Die konfokale Messvorrichtung umfasst zumindest eine Linsenanordnung, bei welcher die Linsen konfokal angeordnet sind. Die Linsenanordnung ist so ausgestaltet, dass das Licht auf kontrollierte Art in seine monochromatischen Wellenlängen zerlegt wird. Hierzu werden eine oder mehrere Linsen eingesetzt, welche dispersiv auf das Licht wirken, sodass blaue Lichtanteile näher an der Linse fokussiert werden und die roten Lichtanteile weiter weg, oder umgekehrt.

Die konfokale Messvorrichtung berührt das Objekt dabei nicht, eine Wechselwirkung mit dem Objekt ergibt sich nur durch das Licht. Am und im Objekt erfolgt nach den bekannten Gesetzen der Optik eine Reflexion, Absorption und Transmission des Lichts. Das am Objekt reflektierte Licht, z. B. Reflexionslicht der Oberfläche des Objekts, Reflexionslicht der Basisplatte oder Reflexionslicht von Luft- oder Fremdkörpereinschlüssen, wird von der konfokalen Messvorrichtung empfangen und über die Linsenanordnung auf ein Spektrometer geführt.

Aus den Messwerten des Spektrometers ermittelt die Auswerteeinheit eine oder mehrere dominante Wellenlängen, bzw. Spektralfarben des reflektierten Lichts. Die dominanten Wellenlängen können im Rahmen der vorliegenden Offenbarung auch als "Peaks" bezeichnet werden. Die Auswerteeinheit ist so kalibriert, dass jeder Wellenlänge des reflektierten Lichts ein bestimmter Abstandswert zum Messobjekt, z. B. zur letzten gedruckten Schicht des Objekts oder zur Basisplatte, zugeordnet ist. Aus dem Wissen über die Fokusweiten der einzelnen Wellenlängen kann jeder dominanten Wellenlänge direkt ein Abstandswert zum Messobjekt zugeordnet werden. Insbesondere wird zunächst diejenige Lichtwellenlänge zur Messung herangezogen, die sich exakt auf der Oberfläche des gedruckten Objekts (bzw. vor dem Druck und außerhalb des gedruckten Objekts auf der Basisplatte) fokussiert. Die Auswerteeinheit kann hieraus den Abstand des Druckkopfes zu der Oberfläche bestimmen, an denen weitere zu druckende Druckmassen gedruckt werden können. Ist das Druckmaterial transparent, dann können weitere dominante Wellenlängen auftreten, die auch als weitere "Peaks" bezeichnet werden. Weitere Peaks treten aufgrund des Übergangs vom optisch dünneren Medium zum optisch dichteren Medium oder umgekehrt z. B. bei Luft- oder Fremdkörpereinschlüssen im Objekt auf. Eine weitere dominante Wellenlänge ergibt sich an der Grenze Objekt / Basisplatte. Die Oberfläche des gedruckten Objekts ist dabei der von den kurzen Wellenlängen aus gesehen erste Peak und die Basisplatte ist der letzte Peak. Die Auswerteeinheit kann zur Auswertung insbesondere Software-implementierte Komponenten aufweisen.

Die bevorzugte Auflösung der Abstandsmessung liegt im Bereich von 10 bis 500 nm, bevorzugt 10 bis 200 nm, weiter bevorzugt 20 bis 50 nm, besonders bevorzugt bei etwa 28 nm. Der Messbereich der Abstandsmessung liegt bevorzugt im Bereich von 0,3 bis 30 mm, bevorzugt 0,5 bis 3 mm, besonders bevorzugt bei etwa 1 mm. Die bevorzugte Größe des Lichtfleckdurchmessers liegt im Bereich von 5 bis 100 µm, bevorzugt 5 bis 50 µm, weiter bevorzugt 6 bis 9 µm, besonders bevorzugt bei etwa 8 µm. In X- und Y-Richtung weist die konfokale Messvorrichtung bevorzugt zwischen 100 und 200 µm Genauigkeit auf.

Weil als Material Silikonkautschukmasse verwendet wird, die durch UV/VIS-induzierte Additionsreaktion vernetzt, ist bevorzugt vorgesehen, dass das zur Abstandsmessung verwendete Licht keine Komponenten enthält, die ungewollt zur Aushärtung der Silikonkautschukmasse führen. Wird beispielsweise UV/VISinduziert Additions-vernetzende Silikonkautschukmasse eingesetzt, die bei Licht der Wellenlänge 240-500 nm, bevorzugt 250-400 nm, besonders bevorzugt 350-400 nm, insbesondere bevorzugt 365 nm vernetzt, dann kann gemäß einer ersten Ausführungsform also vorgesehen sein, dass die Lichtquelle der konfokalen Messvorrichtung keine Anteile dieses Lichts aussendet, z. B. Weißlicht ohne Anteile dieses Lichts. Alternativ oder zusätzlich hierzu kann die konfokale Messvorrichtung einen oder mehrere Filter aufweisen, um die entsprechenden Anteile des Lichts herauszufiltern.

Dadurch, dass die Messung die gedruckten Schichten nicht beeinflusst, ist es insbesondere auch möglich, mehrere Schichten aufeinander zu drucken und dabei zu vermessen, ohne jede Schicht dabei direkt auszuhärten (n-Layer-Strategie).

Die Bestimmung des Abstands des Druckkopfes zu der Oberfläche, an denen zu druckende Druckmassen gedruckt werden können, erfolgt in Bezug auf die Basisplatte, aber auch in Bezug auf bereits gedruckte Schichten, wobei diese im Falle von Silikon oder Silikonelastomer oftmals transparent sind. Bevorzugt ist das System mit der konfokalen Messvorrichtung daher dazu eingerichtet, die Positionen, an denen die zu druckenden Druckmassen gedruckt werden können, auf einer Schicht zu bestimmen, die zumindest teilweise aus einer transparenten Druckmasse gebildet ist, insbesondere auf einer Schicht mit einem Silikon oder Silikonelastomer. Vorteilhaft sind das Spektrometer und die Auswerteeinheit des Systems dazu eingerichtet, die schwache Reflektion an der Grenzfläche zwischen zwei verschiedenen optisch dichten Medien (z. B. Luft / Silikon) zu detektieren.

Gemäß einer bevorzugten Ausführungsform ist das System mit der konfokalen Messvorrichtung außerdem dazu eingerichtet, Luft- und Fremdmaterialeinschlüsse in gedruckten Schichten zu bestimmen.

Die Auswerteeinheit wertet hierzu die Lage aller im Spektrometer detektierten auftretenden dominanten Wellenlängen aus. Bei Luftblasen und bei transparenten Fremdkörpern in gedruckten Schichten treten zusätzlich zur Objektoberfläche und zur Basisplatte weitere dominante Wellenlängen auf. Bei Einschlüssen von undurchsichtigen, d. h. opaken Fremdkörpern verschiebt sich oder verschwindet z. B. die dominante Wellenlänge der Basisplatte. Fehlstellen wie Einschlüsse von Fremdmaterial oder Luftblasen können damit erkannt werden. Werden Fremdkörper oder Lufteinschlüsse detektiert, können entsprechende Fehlermeldungen erzeugt werden, die auf einen Fehldruck hinweisen. Es kann auch vorgesehen sein, dass das System Komponenten umfasst, die die Fehler korrigieren, beispielsweise durch zusätzlichen Druck von Druckmasse bei Fehlstellen oder durch Entfernen der Fremdkörper, beispielsweise mittels eines Roboterarms.

Da der Abstand des Fokuspunktes von der Linse vom Brechungsindex des Mediums abhängig ist, wird bei der Bestimmung des Abstands von Fehlstellen und Einschlüssen (z. B. in einem transparenten Objekt) eine Abstandskorrektur vorgenommen. Dabei wird der materialabhängige Brechungsindex des Objekts bzw. des Mediums berücksichtigt.

Bevorzugt ist das System mit der konfokalen Messvorrichtung außerdem dazu eingerichtet, zu bestimmen, auf welches Material die zu druckenden Druckmassen gedruckt werden können.

Die Auswerteeinheit wertet hierzu die Intensität aller im Spektrometer auftretenden dominanten Wellenlängen aus. Dabei unterscheidet sie zwischen Druckmasse, Stützmaterial und Material der Basisplatte. Weiterhin kann die Auswerteeinheit auch zwischen Materialien unterscheiden, die nebeneinander in einer ebenen Fläche gedruckt werden, z. B. beim im Folgenden beschriebenen Applikationsdruck, oder wenn z. B. ein Material in einem weiteren Material eingebettet wird. Um den Übergang von einem transparenten Material zu einem intransparenten Material zu detektieren, kann auch das Verschwinden der Reflexion der Basisplatte herangezogen werden, sofern es noch im Messbereich der konfokalen Messvorrichtung liegt.

Aufgrund von Verschleiß oder mechanischer Einwirkungen verändert sich im Laufe der Zeit die Ausrichtung der Basisplatte zum Druckkopf. Gemäß einer bevorzugten Ausführungsform ist das System mit der konfokalen Messvorrichtung außerdem dazu eingerichtet, die Lage einer Druckebene zu bestimmen, in der die zu druckenden Druckmassen gedruckt werden. Die Auswerteeinheit bestimmt die Lage der Druckebene anhand mehrerer nicht auf einer Linie befindlicher gemessener Abstände.

Beispielsweise wird hierzu eine Messpunktmatrix verwendet, die zumindest dem Rang der Druckpunktmatrix entspricht. Beim Dispensdruck wird die Messpunktmatrix zumindest dem Rang der Positionsmatrix des Druckkopfes erhalten. Die bevorzugte Größe des Lichtfleckdurchmessers im Bereich von 5 µm bis 100 µm bei einer Auflösung der Abstandsmessung im Bereich von 10 bis 200 nm, bevorzugt etwa 20 bis 40 nm erlaubt das Vermessen jedes einzelnen gesetzten Voxels.

Für den Fall, dass noch kein Material gedruckt wurde, bildet die Basisplatte, auf der das zu druckende Objekt aufgebaut wird, die Druckebene. Wenn schon erste Schichten gedruckt worden sind, kann die Druckebene aber auch durch die Lage der zuletzt gedruckten Schicht beschrieben werden.

Die Lage der Druckebene kann beispielsweise durch Angabe von Versatz und Verkippung gegenüber dem Druckkopf bzw. zur Druckkopfebene beschrieben werden, oder auch durch Angabe des Abstands zum Druckkopf und der Orientierung im Raum. Hierzu weist die Auswerteeinheit entsprechende Softwaremodule auf.

Bei Kenntnis der Lage der Druckebene kann das System kalibriert werden, z. B. indem Versatz und Verkippung gegenüber dem Druckkopf bzw. der Druckkopfebene oder der Abstand der Druckebene in Bezug auf die jeweilige Austragevorrichtung und die Orientierung im Raum eingestellt werden. Nach einer bevorzugten Ausführungsform weist die 3D-Druckvorrichtung daher eine Korrigiervorrichtung auf, die funktionell mit dem System der konfokalen Messvorrichtung verbunden und dazu eingerichtet ist, die Lage der Druckebene zu korrigieren.

Die Korrigiervorrichtung kann Justierelemente zur Justierung der Druckebene umfassen, z. B. Justierschrauben an der Basisplatte und am Druckkopf. Die Justierung der Druckebene kann mechanisch per Hand erfolgen oder automatisch. Bevorzugt umfasst die Korrigiervorrichtung ansteuerbare Aktoren, die z. B. Verkippung und Versatz automatisch per Computersteuerung einstellen können.

Für den Fall, dass die Austragevorrichtung eine Jetting-Düse ist, kann die Korrigiervorrichtung auch Justierelemente zur Justierung der Ausrichtung des Druckkopfs aufweisen, beispielsweise Winkeljustierschrauben. Durch Toleranz in der Mechanik und in der Düsengeometrie werden ausgebrachte Tropfen, die zu Druckvoxeln führen, nicht senkrecht ausgestoßen, sondern in einem kegelförmigen Toleranzbereich. Die Spitze des Kegels ist dabei durch den Düsenausgang gebildet und die Grundfläche der Bereich auf der Druckebene, auf welcher der Tropfen auftrifft. Eine nicht senkrechte Ausrichtung des Druckkopfes, Toleranzen der Düsenformung sowie Verschmutzungen und Ablagerungen in der Düse oder Luftströmungen können eine ungewollte Ablenkung der Tropfentrajektorien erzeugen. Bevorzugt sind auch hier ansteuerbare Aktoren vorgesehen, um den Winkel automatisch per Computersteuerung einstellen zu können.

Die konfokale Messvorrichtung ist gemäß einer bevorzugten Ausführungsform ortsfest in Bezug auf den Druckkopf angeordnet. Insbesondere kann vorgesehen sein, dass die konfokale Messvorrichtung an einem Transportschlitten des Druckkopfs befestigt angeordnet ist.

Bevorzugt ist die konfokale Messvorrichtung so angeordnet, dass sie dem Druckkopf während des Drucks vorauseilt. Hierbei können ggf. nötige Korrekturen vor dem Druck errechnet und/oder durchgeführt werden. Es können auch mehrere konfokale Messvorrichtungen vorgesehen sein, die um den Druckkopf bzw. um die Austragevorrichtung herum angeordnet sein können.

Weiter bevorzugt weist die 3D-Druckvorrichtung zumindest einen steuerbaren Roboterarm zur Platzierung oder Manipulation von gedruckten Objekten oder Fremdbauteilen auf.

Der steuerbare Roboterarm ermöglicht beispielsweise ein automatisches Bestücken des 3D-Druckers mit Fremdbauteilen, die bedruckt, beschichtet oder auf welche Applikationen aufgedruckt werden sollen. Auch Drehen, Repositionieren und Entnehmen des Fremdbauteils oder des gedruckten Objekts ist automatisch möglich. Weiterhin kann mittels des Roboterarms ein Entfernen von erkanntem Fremdmaterial erfolgen.

Die 3D-Druckvorrichtung weist ein Hauptsteuergerät auf, welches eine Vorlage bzw. ein Computermodell des zu druckenden Objekts enthält. Das Hauptsteuergerät kann beispielsweise als ein Computer ausgeführt sein, welcher mit den Steuereinrichtungen der Geräte beispielsweise über ein Datennetzwerk wie z. B. Ethernet oder WLAN oder über eine Verbindung wie z. B. eine serielle Verbindung oder USB kommuniziert.

Auf dem Hauptsteuergerät kann das Computermodell in einem beliebigen Dateiformat hinterlegt sein. Übliche Dateiformate umfassen z.B. STL, OBJ, CLI/SLC, PLY, VRML, AMF, STEP, IGES. Bei der Durchführung des beschriebenen Verfahrens werden durch das Hauptsteuergerät virtuelle horizontale Schnitte durch das Modell erzeugt (sog. *Slicen*)*.* Aus diesen horizontalen Schnitten wird im Anschluss ein Schema berechnet, welches angibt, wie die Druckmassen zum generativen Aufbauen des Objekts platziert werden müssen. Das Schema enthält insbesondere die Soll-Positionen der Druckmassen. Hierbei wird berücksichtigt, ob der Austrag der Druckmassen in Form von Voxeln, in Form von Strängen oder in Form einer Kombination aus Voxeln und Strängen erfolgt. Erfordert die Form des Objekts das Setzen von Stützmaterial, so ist das Hauptsteuergerät bevorzugt eingerichtet, auch ein Schema zum Setzen des Stützmaterials zu erzeugen.

Das Hauptsteuergerät ist funktionell mit dem System mit der konfokalen Messvorrichtung verbunden. Beispielsweise kann das Hauptsteuergerät hierdurch Kenntnis über die Positionen erhalten, an denen zu druckende Druckmassen gedruckt werden können, sodass gegebenenfalls das Schema aktualisiert werden kann. Auch die weiteren von dem System mit der konfokalen Messvorrichtung ermittelten Informationen, beispielsweise über Luft- und Fremdmaterialeinschlüsse oder über das Material, auf das gedruckt wird, oder die Lage der Druckebene, können kommuniziert werden.

Das Hauptsteuergerät ist darüber hinaus funktionell mit den weiteren Vorrichtungen der 3D-Druckvorrichtung verbunden, insbesondere mit Druckköpfen, Positioniereinrichtungen, Positionsmesseinrichtungen, Druckmassenmessungen, Korrigiervorrichtungen und Roboterarmen.

Die Positioniereinrichtung ist eingerichtet, den Druckkopf relativ zu der Basisplatte zu positionieren, wobei die Relativposition zumindest entlang der drei Raumachsen X, Y und Z verstellbar ist, gegebenenfalls auch drehbar. Die Positioniereinrichtung umfasst mindestens einen Motor, wobei üblicherweise für jede verstellbare Raumachse zumindest ein separater Motor vorgesehen ist. Der Motor ist beispielsweise als Elektromotor, insbesondere als Schrittmotor ausgeführt.

Die Positionsmesseinrichtung ist bevorzugt eingerichtet, die Position des Druckkopfs laufend zu bestimmen. Hierzu kann vorgesehen sein, dass die Positionsmesseinrichtung Messungen der Position des Druckkopfs mit einer vorgegebenen Rate vornimmt und an das Hauptsteuergerät übermittelt.

Die Positionsmesseinrichtung ist bevorzugt eingerichtet, zu jeder durch die Positioniereinrichtung verstellbaren Achse oder Raumrichtung eine Messung der Position mit Bezug zu dieser Achse oder Raumrichtung vorzunehmen. Zumindest ist die Positionsmesseinrichtung eingerichtet, die Position des Druckkopfes innerhalb einer Ebene parallel zu der Basisplatte zu bestimmen. Bevorzugt ist sie eingerichtet, die Position des Druckkopfes im Raum zu bestimmen.

Die Positionsmesseinrichtung weist bevorzugt zumindest einen Schrittzähler am Motor, Drehgeber (Encoder), optischen Maßstab, insbesondere einen Glasmaßstab, GPS-Sensor, Radarsensor, Ultraschallsensor, LIDAR-Sensor und/oder zumindest eine Lichtschranke auf. Der Schrittzähler am Motor kann insbesondere als berührungsloser Schalter, beispielsweise als Magnetsensor, insbesondere Hallsensor ausgestaltet sein.

Ziel der Erfindung ist es, ein 3D-Druckverfahren bereitzustellen. Die beschriebene 3D-Druckvorrichtung ist zur Ausführung der im Folgenden beschriebenen Verfahren ausgeführt und/oder eingerichtet. Entsprechend werden im Rahmen der Verfahren beschriebene Merkmale für die 3D-Druckvorrichtung und umgekehrt im Rahmen der 3D-Druckvorrichtung beschriebene Merkmale für die Verfahren offenbart.

Bei einem Verfahren gemäß Anspruch 1, zum Herstellen eines Objekts unter Einsatz einer 3D-Druckvorrichtung, die zumindest einen Druckkopf mit zumindest einer Austragevorrichtung aufweist, die eingerichtet ist, um Druckmassen an Soll-Positionen zu setzen, um Objekte generativ zu erzeugen, ist vorgesehen, dass mittels eines zumindest eine konfokale Messvorrichtung aufweisenden Systems während eines Druckvorgangs berührungslos ein Abstand des Druckkopfs zu einer Oberfläche bestimmt wird, auf der zu druckende Druckmassen gedruckt werden können, oder dass mittels des die konfokale Messvorrichtung aufweisenden Systems in einem Scanschritt vor dem Druckvorgang berührungslos die Lage einer Oberfläche, auf die zu druckende Druckmassen gedruckt werden können, bestimmt wird.

Während des Druckvorgangs wird der Abstand des Druckkopfes zu einer Oberfläche berührungslos bestimmt, auf der zu druckende Druckmassen gedruckt werden können. Aus dem berührungslos bestimmten Abstand des Druckkopfs zu der Oberfläche, auf der die zu druckenden Druckmassen gedruckt werden können, und aus der Position des Druckkopfs wird beispielsweise die Position eines Punkts auf der Oberfläche bestimmt, an dem eine Druckmasse abgelegt werden soll. Die Messvorrichtung läuft dabei dem Druckkopf voraus. Hierdurch können Druckfehler, insbesondere nicht gedruckte Druckmassen, Fehlstellen und Fremdmaterialablagerungen erkannt werden. Die Druckfehler können korrigiert werden und/oder berichtet und/oder protokolliert werden.

Mittels des die konfokale Messvorrichtung aufweisenden Systems kann die Lage einer Oberfläche, auf die zu druckende Druckmassen gedruckt werden können, aber auch vor dem Druckvorgang berührungslos bestimmt werden. Insbesondere wird dabei beispielsweise die Lage der Oberfläche relativ zum Druckkopf bestimmt. Die 3D-Druckvorrichtung führt dabei einen eigenständigen Schritt des Scans der zu bedruckenden Oberfläche durch. Auch hierdurch können Druckfehler, insbesondere nicht gedruckte Druckmassen, Fehlstellen und Fremdmaterialablagerungen erkannt werden. Die Druckfehler können korrigiert werden und/oder berichtet und/oder protokolliert werden.

Durch die Korrektur der Druckfehler können mit der Erfindung besonders formentreue Objekte gedruckt werden. Unter der Formentreue wird verstanden, dass die geometrischen Abmessungen des Objekts maßhaltig sind, also keine oder nur geringe Abweichungen von den Abmessungen der Vorlage aufweisen.

Anhand des berührungslos bestimmten Abstands des Druckkopfes zu der Oberfläche bzw. anhand der berührungslos bestimmten Lage der Oberfläche, kann die 3D-Druckvorrichtung kalibriert werden. Auch infolgedessen können besonders formentreue Objekte gedruckt werden.

Die Kalibrierung kann wie beschrieben die Justierung der Basisplatte betreffen oder, nach Druck und anschließender Vermessung eines Testobjekts, die Justierung der Austragevorrichtung, z. B. den Winkel der Düsen.

Eine Korrigiervorrichtung korrigiert dabei z. B. Abweichungen der Lage einer Druckebene, die durch die mechanische Abnutzung entstehen, aber auch Abweichungen, die dadurch entstehen, dass die Druckmasse bei ungenügender oder noch nicht erfolgter Aushärtung verläuft. Die Korrigiervorrichtung korrigiert insbesondere den Einfluss des Schichtverlaufens bei Mehrschichtaufbau mit verzögerter Aushärtung (n-Layer-Strategie).

Eine tolerierbare Abweichung einer Ist-Lage der Druckebene von einer Soll-Lage der Druckebene wird beispielsweise mittels eines Schwellenwerts definiert, wobei dieser beispielsweise im Bereich von 50 bis 500 µm, bevorzugt zwischen 100 und 200 µm, liegt. Alternativ kann der Schwellenwert der der tolerierbaren Abweichung durch die Größe der gedruckten Voxel oder durch den Strangdurchmesser bestimmt sein, wobei die tolerierbare Abweichung beispielsweise unterhalb einer halben Voxelgröße oder eines halben Strangquerschnitts festgelegt ist. Die tolerierbare Abweichung wird entsprechend für den Versatz und die Verkippung der Druckebene definiert, ggf. mit unterschiedlichen Werten.

Zur Initialjustierung kann beim Scanschritt beispielsweise vorgesehen sein, dass Prüfkörper auf der Basisplatte abgelegt werden. Die Verkippung und der mechanische Versatz werden aus den gemessenen Lagen der Oberflächen der Prüfkörper ermittelt, beispielsweise durch das Bestimmen der Ecken und/oder Kanten der Prüfkörper.

Zur Initialjustierung der Ausrichtung des Druckkopfs kann ein Drucken vorgegebener Druckfiguren und Druckmuster und ein Vermessen der gedruckten Druckfiguren erfolgen.

Zur Nachjustierung können weitere Scanschritte vorgesehen sein. Einzelne nicht gedruckte Massen rufen nicht sofort zwangsläufig eine Nachjustierung der Basisplatte hervor, sondern werden vom System als solche erkannt. Die Nachjustierung der Basisplatte erfolgt bevorzugt dann, wenn vom System ein systematischer Fehler erkannt wurde, beispielsweise bei einer Abweichung, die über einen längeren Zeitraum oder z. B. über eine bestimmte Anzahl von Voxeln festgestellt wurde, beispielsweise bei mehr als 10 Voxeln oder bei mehr als 50 Voxeln.

Gemäß einer bevorzugten Ausführungsform ist vorgesehen, dass in dem Scanschritt vor dem Druckvorgang berührungslos die Lage der Oberfläche bestimmt wird, auf welche die zu druckende Druckmassen gedruckt werden können, und dass ein CAD-Modell der ermittelten Oberfläche erstellt wird. Die Daten werden dabei in einem bekannten verarbeitungsfähigen Format erzeugt und gespeichert.

Somit ist es möglich, an beliebig geformten Körpern Beschichtungen, Aufsätze oder Applikationen zu drucken. Beispielsweise können uneben geformte Körper wie Linsen mit aufgedruckten Halterungen versehen werden. Weiterhin können an metallischen Bauelementen Überzüge oder Pufferelemente aufgedruckt werden. Weiterhin kann ein Einbettungsdruck von Elektroden, elektrischen Aktoren oder Sensoren in Silikon vorgenommen werden. Die Einbettung kann beispielsweise notwendig sein, um diese für den menschlichen oder tierischen Körper auf verträgliche Weise implantierbar zu gestalten. Anwendungen liegen bei medizinischen Implantaten, wie etwa Gehörimplantaten oder bei medizinischer Sensorik. Beispielsweise können elektrische Aktoren oder Sensoren durch Einbetten von elektroaktiven Polymeren in Silikon erzeugt werden.

Weiterhin lassen sich mit dem erfindungsgemäßen Verfahren Abbilder bestehender Strukturen oder Bauteile erzeugen, insbesondere auch Abbildungen transparenter Bauteile. Die bestehende Struktur oder das Bauteil wird gescannt, als CAD-Modell eingelesen und nachgedruckt. Vorteilhaft sind keine zwei getrennten Geräte erforderlich, sodass eine separate Scaneinrichtung entfällt.

Gemäß einer Ausführungsform wird zumindest ein Fremdbauteil auf einer Basisplatte oder auf einer gedruckten Schicht angeordnet, wobei die Lage der bedruckbaren Oberfläche des Fremdbauteils durch das System mit der konfokalen Messvorrichtung ermittelt wird.

Somit können auch in vorhandenen Druckkörpern während des Drucks externe Elemente eingesetzt und im Druckkörper eingedruckt werden. Durch die Höhenmessung wird die Position und Lage des Fremdbauteils ermittelt und diese Daten werden durch die Software im Druckprozess weiter verarbeitet. Das Fremdbauteil kann dabei im Laufe des Druckvorgangs völlig oder nur teilweise mit Druckmasse beschichtet oder von der Druckmasse umschlossen werden.

Die Anordnung des Fremdbauteils auf der Basisplatte oder auf der gedruckten Schicht erfolgt bevorzugt automatisch, z. B. mittels eines Roboterarms. Falls Ungenauigkeiten erkannt werden, können diese umpositioniert werden.

Fremdbauteile sind beispielsweise elektrische Sensoren, Aktoren, Signalgeber oder Mikrochips.

Nach einer weiteren Ausführungsform können nach einem Druckvorgang mittels des Systems mit der konfokalen Messvorrichtung außerdem Positionen gedruckter Druckmassen berührungslos bestimmt werden.

Die Messung, beispielsweise Schicht für Schicht ausgeführt, kann beispielsweise der Qualitätskontrolle dienen. Es kann vorgesehen sein, dass im CAD-Modell beispielsweise die Differenz vom Soll-Modell zum Ist-Modell dargestellt wird. Insbesondere bei Hinterschneidungen und bei schwer zugänglichen Innenräumen von Objekten ist diese Art der Dokumentation der Qualität vorteilhaft. Eine spätere Untersuchung wäre oftmals nur noch aufwendig oder bedingt möglich.

Gemäß einer bevorzugten Ausführungsform des Verfahrens ist vorgesehen, anhand der Daten des die konfokale Messvorrichtung aufweisenden Systems qualitätsbestimmende Kennzahlen des gedruckten Objekts zu bestimmen und auszugeben, insbesondere die Oberflächenrauhigkeit, die Oberflächengüte, die Oberflächentextur, die Lage (insbesondere die Höhe) und Ebenheitstoleranzen. Durch die erhaltenen CAD-Daten ist eine Ausgabe qualitätsbestimmenden Kennzahlen direkt nach dem Scan oder Druck durchführbar. Auch können entsprechend einschlägiger Normen wie bspw. EN ISO 25178 nach Ausgabe vom 2010-2013 sofortige Angaben zur Oberflächenrauhigkeit von der 3D-Druckeinrichtung ausgegeben werden.

Insbesondere der Druck von transparentem Material hat eine Vielzahl von Anwendungsgebieten, wie z. B. optische Linsen. Die Schichten, auf die gedruckt werden, sind bevorzugt zumindest teilweise aus transparenter Druckmasse gebildet.

Das vorgeschlagene Verfahren findet Anwendung bei der Herstellung von Objekten, welche Silikonelastomerteile, sind. Für die Herstellung des Elastomerteils wird bevorzugt eine der zuvor beschriebenen Druckmassen verwendet. Elastomere, insbesondere Silikonelastomere, stellen spezielle Anforderungen an das 3D-Druckverfahren, da diese Materialien im Gegensatz z. B. zu thermoplastischen Kunststoffen elastisch sind und sich während der Herstellung des Objekts verformen können. Zudem sind die unvernetzten Materialien bis zu ihrer Aushärtung fließfähig.

Das mit dem vorgeschlagenen Verfahren hergestellte Objekt zeichnet sich durch eine Qualität aus, welche der Qualität mittels Spritzguss hergestellter Elastomerteile entsprechen kann oder diese sogar übertrifft. Dabei kann die Oberfläche des Objekts wie gewünscht angepasst werden. Die Oberfläche kann z. B. strukturiert, insbesondere regelmäßig strukturiert, oder glatt und/oder vollständig geschlossen ausgebildet werden. Dabei weisen die erfindungsgemäß hergestellten Objekte aufgrund der Möglichkeit des Nachdrucks fehlerhaft nicht-gesetzter Druckmassen keine eingeschlossenen Luft- oder Gasbläschen auf. Somit können mechanisch beanspruchbare Objekte mit verlässlichen physikalischen Eigenschaften erzeugt werden, welche z. B. auch für medizinische Anwendungen geeignet sind. Beispielsweise können gedruckte Objekte mit homogenen Elastizitäts- oder Glattheitseigenschaften oder, bei optischen Linsen, isotroper optischer Transparenz bereitgestellt werden. Des Weiteren zeichnet sich das gedruckte Objekt dadurch aus, dass dessen Geometrie nicht durch die bei Gussverfahren eingesetzten Formwerkzeuge beschränkt ist. Somit kann das gedruckte Objekt Hinterschnitte und/oder eingeschlossene Hohlräume aufweisen. Ebenso ist das gedruckte Objekt frei von Graten, die bei spritzgegossenen Teilen insbesondere an der Trennung der Formhälften und an dem Angusssystem auftreten.

### Vorteile der Erfindung

Das System wertet Reflexionen an den Grenzflächen von Materie und Umgebung aus. Vorteilhaft berührt die konfokale Messvorrichtung das gedruckte Objekt nicht und ist elektrostatisch unbedenklich. Unerwünschte Kontamination und Deformation wird vermieden. Die vorgestellte Lösung bietet aufgrund der optischen Messung außerdem eine hohe Auflösung.

Die kontinuierliche, berührungslose Erfassung des Abstands der Austragevorrichtung zur Druckebene, bzw. zum gedruckten Objekt, ermöglicht, die optimale Ablagehöhe der Druckmassen einzuhalten. Durch eine geeignete Strategie mit dem Umgang des Messergebnisses ist es möglich, Objekte mit hoher Formentreue zu drucken, insbesondere auch transparente Objekte. Die Maßhaltigkeit der gedruckten Objekte und qualitätsbestimmende Kennzahlen können ständig überprüft werden.

Die konfokale Messung macht die Abstandsbestimmung an beliebig harten und beliebig viskosen und auch an transparenten Stoffen möglich. Somit wird ein 3D-Applikationsdruck an beliebig geformten, beliebig harten, beliebig viskosen und transparenten Körpern sowie freitragender Strukturen mit und ohne Stützmaterial möglich. Auch die Einbettung beliebig geformter, beliebig harter, beliebig viskoser und transparenter Körper in ein 3D-gedrucktes Objekt wird möglich.

Insbesondere können also Silikondrucke und Applikationsdrucke mit Silikon so ausgeführt werden, dass Anforderungen an die Maßhaltigkeit erfüllbar werden, die beispielsweise medizinische Applikationen möglich machen.

### Kurze Beschreibung der Figuren

In den Figuren sind Ausführungsbeispiele der Erfindung dargestellt, wobei die Figuren den Gegenstand der Erfindung nur schematisch darstellen. Die dargestellten und im Folgenden mit Bezug zu den Figuren beschriebenen Ausführungsbeispiele sind für den Gegenstand der Erfindung nicht als einschränkend aufzufassen. Dem Fachmann wird eine Vielzahl von Abwandlungen ersichtlich sein, welche im Rahmen der Patentansprüche möglich sind.

Es zeigen
- Figur 1: eine Draufsicht auf eine 3D-Druckvorrichtung gemäß einer ersten Ausführungsform der Erfindung,
- Figur 2: eine Draufsicht auf eine 3D-Druckvorrichtung gemäß einer weiteren Ausführungsform der Erfindung,
- Figur 3: eine Seitenansicht einer Höhenmessung gemäß einer ersten Ausführungsform der Erfindung,
- Figur 4: eine Seitenansicht einer Höhenmessung gemäß einer weiteren Ausführungsform der Erfindung,
- Figur 5: eine Seitenansicht zur Darstellung einer Winkeltoleranz beim Jetting,
- Figur 6: eine Seitenansicht einer verkippten und versetzten Basisplatte und
- Figur 7: eine perspektivische Ansicht einer Basisplatte einer 3D-Vorrichtung gemäß einer Ausführungsform der Erfindung.

### Detaillierte Beschreibung der Figuren

In der nachfolgenden Beschreibung der Ausführungsbeispiele der Erfindung werden gleiche oder ähnliche Komponenten und Elemente mit gleichen oder ähnlichen Bezugszeichen ausgestattet, wobei auf eine wiederholte Beschreibung dieser Komponenten oder Elemente in Einzelfällen verzichtet wird.

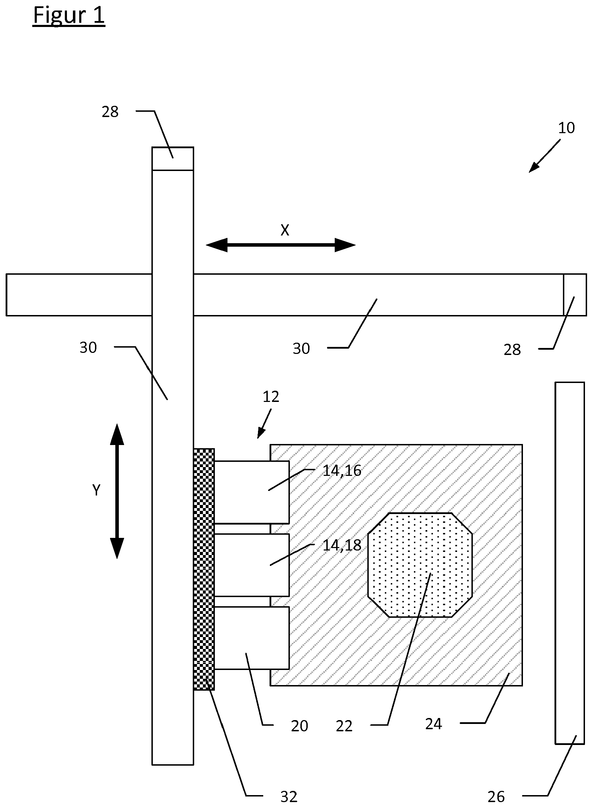

Figur 1 zeigt schematisch eine Draufsicht auf eine 3D-Druckvorrichtung 10. Die 3D-Druckvorrichtung 10 umfasst einen Druckkopf 12, der von einer nicht dargestellten Steuereinrichtung über ein ebenfalls nicht dargestelltes Hauptsteuergerät angesteuert wird. Der Druckkopf 12 umfasst im dargestellten Beispiel zwei Austragevorrichtungen 14. Eine Austragevorrichtung 14 ist als eine Jetting-Düse 16 ausgeführt. Die Jetting-Düse 16 gibt die Druckmassen als einzelne Tropfen aus und setzt die Druckmassen in Form von Voxeln. Die andere Austragevorrichtung 14 ist als ein Dispenser 18 ausgestaltet und setzt die Druckmassen in Form von Strängen.

In dem in Figur 1 dargestellten Beispiel werden sowohl die Jetting-Düse 16 als auch der Dispenser 18 zum generativen Aufbau eines Objekts 22 eingesetzt. Beispielsweise können mit Hilfe der Jetting-Düse 16 Voxel gesetzt werden, die die Oberfläche des Objekts 22 bilden, und mit dem Dispenser 18 Stränge gesetzt werden, um das Innere des Objekts 22 aufzufüllen. Das Objekt 22 wird auf einer Basisplatte 24 aufgebaut.

Die 3D-Druckvorrichtung 10 weist eine konfokale Messvorrichtung 20 auf, die hier beispielsweise ortsfest in Bezug auf den Druckkopf 12 gleichseitig wie dieser an einem Transportschlitten 32 angeordnet ist, der den Druckkopf 12 entlang der Y-Achse bewegt.

Für den Fall, dass Druckmasse eingesetzt wird, die durch Einwirkung von UV/VIS-Strahlung aushärtet, ist eine UV/VIS-Lichtquelle vorgesehen. In der Ausführungsform der Figur 1 ist hierzu eine LED-Leiste 26 vorgesehen, die UV/VIS-Licht ortsselektiv emittiert. Um die Fläche der Basisplatte 24 mit UV/VIS-Licht überstreichen zu können, ist die LED-Leiste 26 beweglich ausgeführt.

Bei wärmeaushärtenden Druckmassen ist alternativ eine IR-Lichtquelle vorgesehen, die eingerichtet ist, ortsselektiv die Druckmassen zu erwärmen. Dazu kann die IR-Lichtquelle insbesondere am Druckkopf 12 befestigt sein. Alternativ kann zur Aushärtung wärmeaushärtender Druckmassen die 3D-Druckvorrichtung 10 in einem beheizbaren Raum betrieben werden.

Zur Positionierung des Druckkopfes 12 relativ zur Basisplatte 24 umfasst die 3D-Druckvorrichtung 10 ferner drei Positioniereinrichtungen 28, wovon zwei in Figur 1 dargestellt sind. Jede der Positioniereinrichtungen 28 ermöglicht eine Bewegung des Druckkopfes 12 in jeweils eine der drei Raumachsen X, Y und Z. Jede der Positioniereinrichtungen 28 ist hierzu mit einer Achse 30 verbunden, entlang derer die Bewegung ermöglicht wird. Die dritte, nicht dargestellte Positioniereinrichtung ist der Basisplatte 24 zugeordnet und ermöglicht eine Verschiebung der Basisplatte 24 entlang der in die Zeichenebene hinein gerichteten Raumrichtung. Die zwei dargestellten Positioniereinrichtungen 28 sind dem Druckkopf 12 zugeordnet und ermöglichen dem Druckkopf 12 die Bewegung entlang der mit "X" und "Y" bezeichneten Raumrichtungen. Alle drei Positioniereinrichtungen 28 zusammen ermöglichen es, den Druckkopf 12 entlang jeder der drei Raumrichtungen relativ zu der Basisplatte 24 zu positionieren. Die dargestellte Lösung ist rein beispielhaft. Dem Fachmann sind weitere Möglichkeiten bekannt.

Zum Ermitteln der Position des Druckkopfs 12 kann die 3D-Druckvorrichtung 10 Positionsmesseinrichtungen aufweisen, welche nicht dargestellt sind. Die Positionsmesseinrichtungen können beispielsweise jeweils einer der drei Raumrichtungen X, Y und Z zugeordnet sein und die Bewegung des Druckkopfes 12 bzw. der Basisplatte 24 erfassen, sodass die relative Position des Druckkopfes 12 zur Basisplatte 24 bevorzugt laufend ermittelt wird.

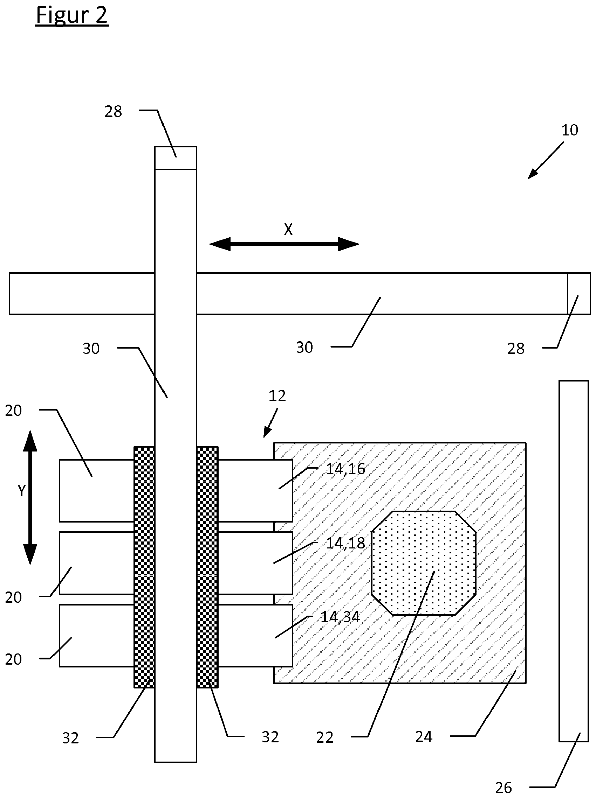

Figur 2 zeigt eine Draufsicht auf eine 3D-Druckvorrichtung 10. Die 3D-Druckvorrichtung 10 ist im Wesentlichen wie mit Bezug zu Figur 1 beschrieben ausgestaltet. Die 3D-Druckvorrichtung 10 unterscheidet sich gegenüber der beschriebenen Vorrichtung aber dadurch, dass drei Austragevorrichtungen 14 für Druckmasse vorgesehen sind und drei konfokale Messvorrichtungen 20.

Die ersten beiden Austragevorrichtungen 14 sind wie mit Bezug zu Figur 1 beschrieben ausgestaltet. Die dritte Austragevorrichtung 14 ist als weitere Jetting-Düse 34 ausgestaltet und zum Setzen von Stützmaterial vorgesehen.

Die konfokalen Messvorrichtungen 20 sind jeweils einer der Austragevorrichtungen 14 zugeordnet. Die konfokalen Messvorrichtungen 20 und die Austragevorrichtungen 14 sind einander gegenüberliegend an dem Transportschlitten 32 angeordnet, der den Druckkopf 12 entlang der Y-Achse bewegt.

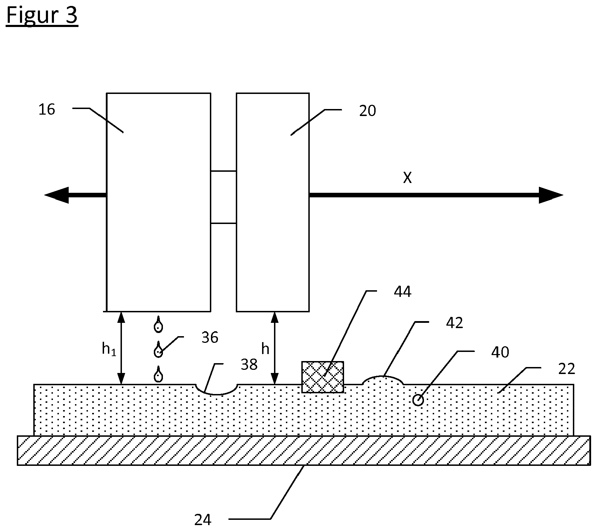

Figur 3 zeigt eine Seitenansicht einer Höhenmessung gemäß einer Ausführungsform der Erfindung. Dargestellt sind eine Jetting-Düse 16 und die konfokale Messvorrichtung 20 über der Basisplatte 24. Die Jetting-Düse 16 setzt Tropfen 36 ab, die nach dem Auftreffen auf das Objekt 22 bzw. auf die Basisplatte 24 die gedruckten Voxel bilden.

Die Jetting-Düse 16 ist der konfokalen Messvorrichtung 20 hinterherläufig angeordnet, sodass beim Drucken zunächst eine Höhenmessung über die konfokale Messvorrichtung 20 erfolgt, sodass die Positionen, an denen zu druckende Druckmassen gedruckt werden können, berührungslos bestimmt werden können.

Die konfokale Messvorrichtung 20 kann auch zum Vorab-Scan verwendet werden. Die konfokale Messvorrichtung 20 kann aber auch so verwendet werden, dass *nach* dem Drucken die Positionen gedruckter Druckmassen berührungslos bestimmt werden, beispielsweise um ein CAD-Modell des gedruckten Objekts 22 zu erhalten.

An dem Objekt 22 sind mehrere Druckfehler dargestellt. Ein erster Druckfehler ist eine Fehlstelle 38, welche bereits von der konfokalen Messvorrichtung 20 vermessen wurde und welche während des Drucks der aktuellen Schicht von der erfindungsgemäßen Druckvorrichtung 10 korrigiert werden kann. Die 3D-Druckvorrichtung 10 stellt fest, dass es sich lediglich um einen einzigen oder wenige nicht gedruckte Voxel handelt, sodass die Fehlstelle 38 durch einen gezielten Nachdruck sofort behoben werden kann.

Das gedruckte Objekt 22 weist einen weiteren Druckfehler in Form eines Lufteinschlusses 40 auf, d.h. eine Fehlstelle 38, die bereits vollständig von Druckmasse umschlossen ist. Der Lufteinschluss 40 kann von der konfokalen Messvorrichtung 20 erkannt werden, da im Messlichtstrahl mehrere Grenzflächen von Druckmasse und Luft auftreten, so dass es, sofern der Lufteinschluss 40 noch im Messbereich der konfokalen Messvorrichtung 20 liegt, zu mehreren dominanten Wellenlängen im Empfangssignal kommt. Wird der Lufteinschluss 40 erkannt, so kann beispielsweise eine Fehlermeldung generiert oder eine Nachricht an das Hauptsteuergerät abgesetzt werden, sodass das gedruckte Objekt 22 beispielsweise ausgeschossen wird oder weiteren Qualitätsprüfungen unterzogen werden kann. Insbesondere im Bereich der Optik und der Medizintechnik sind derartige Fehler wie der Lufteinschluss 40 oftmals nicht zulässig und ihre Detektion daher notwendig. Im Falle eines nicht korrigierbaren Fehlers ist die Zeit zum Erkennen des Fehlers auf ein Minimum verkürzt.

Ein weiterer Druckfehler ist in Form einer Erhöhung über dem Objekt 22 dargestellt und zeigt einen möglichen Fremdmaterialeinschluss 42 eines beispielsweise aus der Umgebung stammenden Materials, z. B. Staubpartikel, oder der aus verhärtetem, abgesondertem Material aus der Jetting-Düse 16 bestehen kann. Der Fremdmaterialeinschluss 42 kann von der konfokalen Messvorrichtung 20 erkannt werden, da sich der Abstand zum Objekt 22 kurzfristig verändert. Mit der vorgestellten 3D-Druckvorrichtung kann festgestellt werden, ob es sich bei dem Fremdmaterialeinschluss 42 um das gleiche Material wie beim Objekt 22, nämlich Druckmasse oder Stützmasse, oder um ein anderes Material handelt, da die Reflexionseigenschaften der Grenzfläche Umgebung/Fremdmaterialeinschluss 42 anders sind als bei der Grenzfläche Umgebung/Objekt 22. Nach Detektion des Fremdmaterialeinschlusses 42 kann, soweit festgestellt werden kann, dass sich dieser an der Oberfläche des Objekts 22, d. h. über den gedruckten Schichten des Objekts 22, befindet, vorgesehen sein, entsprechende Warnnachrichten zu generieren, damit der Benutzer eingreifen kann, oder es kann vorgesehen sein, den Fremdmaterialeinschluss 42 automatisch, beispielsweise mithilfe eines Roboterarms, zu entfernen.

In Figur 3 dargestellt ist weiterhin ein Fremdbauteil 44, das beispielsweise mithilfe eines Rotorarms oder händisch auf dem gedruckten Objekt 22 positioniert wurde. Das Fremdbauteil 44 soll mit einer oder mehreren Schichten Druckmasse überdruckt werden, so dass es schließlich in das Objekt 22 eingebettet wird. Das Fremdbauteil 44 ist hier als ein Quader dargestellt, es kann sich aber auch um ein sehr flach ausgebildetes Fremdbauteil 44, beispielsweise um eine elektronische Leiterplatte oder einen Mikrochip, handeln. Nach der Positionierung des Fremdbauteils 44 auf dem Objekt 22 wird die Lage des Fremdbauteils 44 ermittelt. Hierzu wird mittels der konfokalen Messvorrichtung 20 in dem Scanschritt die Oberfläche des Objekts 22 mit dem darin positionierten Fremdbauteil 44 vermessen und es wird die Lage einer Oberfläche bestimmt, an denen zu druckende Druckmassen gedruckt werden können. Die ermittelten Daten können beispielsweise dem Steuerungssystem übergeben werden, um daraus ein CAD-Modell zu erstellen, oder um das CAD-Modell des Objekts 22 zu aktualisieren.

Der Abstand der Jetting-Düse 16 zur letzten gedruckten Schicht ist als Austragehöhe h₁ dargestellt. Der Abstand der konfokalen Messvorrichtung 20 zur letzten gedruckten Schicht ist als h dargestellt. Die beiden Größen sind durch die festgelegte Geometrie ineinander umrechenbar. Da das Fremdbauteil 44 über das gedruckte Objekt 22 in der Höhe um einen von der konfokalen Messvorrichtung 20 gemessenen Betrag hinaussteht, kann beim Überdrucken des Fremdbauteils 44 vorgesehen sein, den Abstand der Jetting-Düse 16 zur Basisplatte 24 um den entsprechenden Betrag zu erhöhen, damit die Austragehöhe h₁ über dem Objekt 22 während des Drucks konstant bleibt, um die Qualität des gedruckten Objekts 22 konstant zu halten.

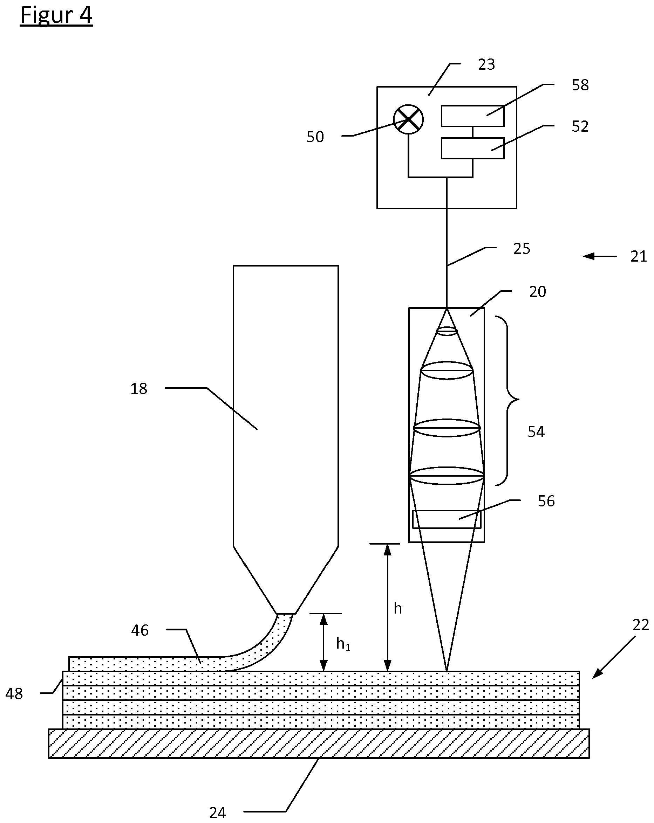

Figur 4 zeigt eine Seitenansicht einer Höhenmessung gemäß einer weiteren Ausführungsform der Erfindung. Dargestellt ist ein Dispenser 18 mit einer während des Drucks des Objekts 22 auf der Basisplatte 24 vorlaufenden konfokalen Messvorrichtung 20. Der Dispenser 18 legt Stränge 46 aus Druckmasse auf der Basisplatte 24 ab, sodass Schichten 48 entstehen. Der Abstand des Dispensers 18 zur letzten gedruckten Schicht ist wiederum als Austragehöhe h₁ dargestellt. Bei ausreichender Austragehöhe h₁ weist der gedruckte Strang 46 im Optimalfall einen zylinderförmigen Strangquerschnitt auf. Durch die Bewegung des Dispensers 18 deformiert sich der Strang 46 leicht. Eine weitere Deformation des Strangs 46 ergibt sich aber auch bei einer zu niedrigen Austragehöhe h₁. Durch die kontinuierliche Messung bzw. Berechnung der Austragehöhe h₁ durch die konfokale Messvorrichtung 20 kann die Deformation korrigiert werden, z. B. durch Anpassung der Austragehöhe h₁.

Figur 4 zeigt außerdem eine Ausführungsform des Systems 21 mit der konfokalen Messvorrichtung 20. Als System 21 werden in diesem Zusammenhang die konfokale Messvorrichtung 20 und eine Auswerteeinheit 58 bezeichnet, die funktionell miteinander verbunden sind. Die Auswerteeinheit 58 ist in diesem Ausführungsbeispiel in einem Controller 23 integriert ausgeführt. Der Controller 23 umfasst eine externe Lichtquelle 50, ein Spektrometer 52 und die Auswerteeinheit 58 in einem gemeinsamen Gehäuse. In alternativen Ausführungsformen können z. B. die Auswerteeinheit 58 und/oder die Lichtquelle 50 mittels geeigneter Schnittstellen als externe Baueinheiten vorgesehen sein.

Die konfokale Messvorrichtung 20 weist gemäß dieser schematisch dargestellten Ausführungsform eine Lichtquelle 50 auf, die beispielsweise eine Weißlichtquelle mit einem homogenen Lichtspektrum ist, insbesondere eine Weißlicht-LED. Das Licht der Lichtquelle 50 wird mittels eines Lichtwellenleiters 25 an eine konfokale Linsenanordnung 54 herangeführt, welche in der Zeichnung beispielhaft durch vier Kollimatorlinsen angedeutet wurde. Durch die konfokale Linsenanordnung 54 erfährt das von der Lichtquelle 50 ausgehende Licht eine chromatische Aberration, sodass blaues Licht stärker gebrochen wird als rotes Licht. Hinter der konfokalen Linsenanordnung 54 ist in der dargestellten Ausführungsform ein Filter 56 angeordnet, der diejenigen Spektralkomponenten der Lichtquelle 50 herausfiltert, welche zu einer ungewollten Aushärtung der gedruckten, aber noch nicht ausgehärteten Schichten 48 führen. Wenn das Licht der Lichtquelle 50 auf die zuletzt gedruckte Schicht 48 oder auf die mit Bezug zu Figur 3 beschriebenen Fehlstellen 38, Lufteinschlüsse 40 und Oberflächen von Fremdbauteilen 44 auftrifft, wird es an diesen reflektiert und läuft über denselben Lichtweg, nämlich über den Filter 56, die konfokale Linsenanordnung 54 und den Lichtwellenleiter 25 zurück zu dem Controller 23, in dem Messung des reflektierten Lichts erfolgt.

Als Spektrometer 52 kann ein beliebiges Spektrometer verwendet werden, das das reflektierte Licht in sein Spektrum zerlegt. Das Spektrometer 52 ist mit der Auswerteeinheit 58 verbunden. Die Auswerteeinheit 58 umfasst typischerweise eine CPU und Speichermittel, sowie geeignete Schnittstellen zu weiteren Recheneinheiten oder zu Ausgabegeräten wie Drucker, Monitore usw. Insbesondere weist sie ein Modul zur Bestimmung der dominanten Wellenlängen im vom Spektrometer 52 detektierten Spektrum auf, sowie eine Datenbank, die eine Zuordnung von Frequenzen der dominanten Wellenlänge, Wellenlängenintensität und Material enthält. Das Spektrometer 52 und die Auswerteeinheit 58 sind somit dazu eingerichtet, ein- oder mehrschichtige Materialien zu vermessen, sodass die Austragehöhe h₁ berechenbar ist und sodass z. B. auch die mit Bezug zu Figur 3 beschriebenen Fehlstellen 38, Lufteinschlüsse 40 und Oberflächen von Fremdbauteilen 44 detektierbar sind.

Die konfokale Messvorrichtung 20 weist im Fokusbereich, d. h. an der Oberfläche des Objekts 22, einen Lichtfleckdurchmesser im Bereich von 5 µm bis 100 µm, bevorzugt etwa 50 µm, auf. Die Auflösung des Systems 21 bei der Bestimmung des Abstands zwischen dem Druckkopf 12 bzw. der konfokalen Messvorrichtung 20 zur Oberfläche kann im Bereich von 10 nm bis 0,5 µm liegen, bevorzugt zwischen 20 nm und 50 nm. Bevorzugt wird die konfokale Messvorrichtung 20 so ausgelegt, dass sie mindestens in X- und Y-Richtung zwischen 100 und 200 µm Genauigkeit aufweist, was in etwa der Größe eines Voxels entspricht. Die Genauigkeit wird dabei auch durch die Messtoleranz in der Mechanik eingeschränkt, d. h. durch die Starrheit der Befestigung der konfokalen Messvorrichtung 20 und der Austragevorrichtung 14 am Transportschlitten 32.

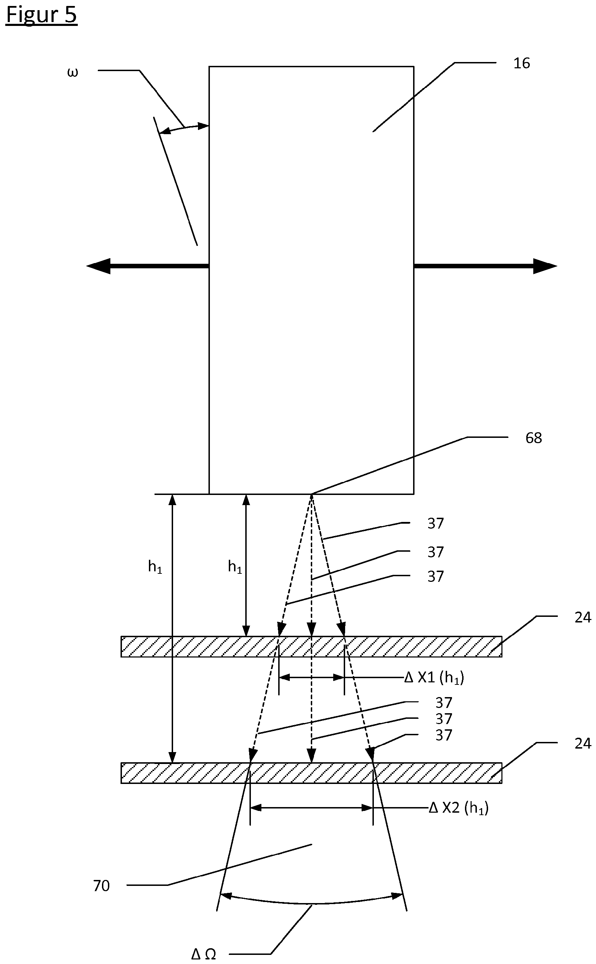

Figur 5 zeigt eine Jetting-Düse 16 in seitlicher Ansicht über der Basisplatte 24, wobei die Basisplatte 24 auf zwei verschiedenen Austragehöhen h₁ gegenüber der Jetting-Düse 16 dargestellt ist. Durch Toleranz in der Mechanik und in der Düsengeometrie werden die ausgebrachten Tropfen, hier dargestellt als Druckstrahlen 37, nicht senkrecht ausgestoßen, sondern befinden sich in einem gewissen Toleranzbereich, der einen Kegel 70 bildet. Der Kegel 70 ist mit einer Kegelöffnung ΔΩ dargestellt. Die Spitze des Kegels 70 bildet eine Austrittsöffnung 68 der Jetting-Düse 16. Durch Drucken vorgegebener Druckfiguren oder Druckmuster und durch Vermessen der Position bzw. Oberfläche der Druckfiguren ist eine Bestimmung der Trajektorientoleranz, dargestellt in Figur 5 durch ΔX1(h₁) und ΔX2(h₁), abhängig von der Austragehöhe h₁ durchführbar. Die daraufhin erhaltenen Werte können zur Justierung eines Austragewinkels ω der Jetting-Düse 16 verwendet werden oder Richtwerte für eine Verschleißanzeige der Jetting-Düse 16 geben.

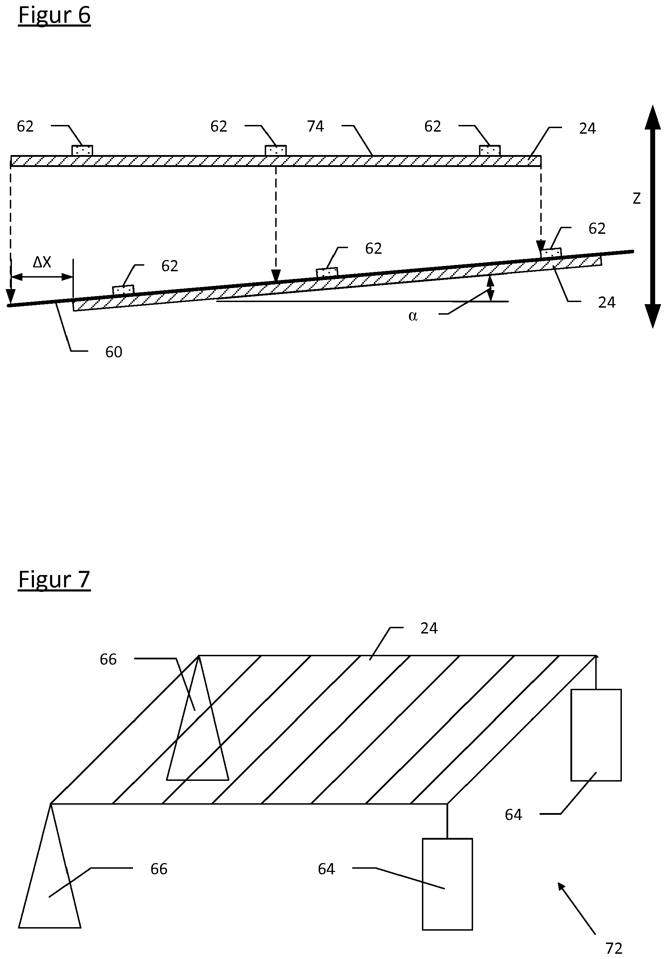

Figur 6 zeigt zwei Mal die Basisplatte 24 in seitlicher Schnittansicht, auf der (rein beispielhaft drei) Testkörper 62 in einem bestimmten Abstand zueinander angeordnet sind. Beim Scanvorgang können durch Messung der Lage und Geometrie der Testkörper mittels der konfokalen Messvorrichtung 20 ein Versatz ΔX und eine Verkippung α der Basisplatte 24 gegenüber einer Normlage 74 ermittelt werden. Auch die Verkippung und Versatz der Basisplatte 24 in Y-Richtung werden gemessen. Durch Angabe der Verkippung und des Versatzes kann die Lage einer Druckebene 60 beschrieben werden. Nach Ermittlung der Verkippung und des Versatzes kann die Lage der Druckebene 60 per Hand oder automatisch zur Einnahme der Normlage 74 justiert werden.

Figur 7 zeigt eine perspektivische Ansicht der Basisplatte 24 mit einer darauf wirkenden Korrigiervorrichtung 72. Die Korrigiervorrichtung 72 ist beispielsweise über das Hauptsteuergerät funktionell mit dem System 21 mit der konfokalen Messvorrichtung 20 verbunden und dazu eingerichtet, die Lage der Druckebene 60 zu korrigieren. Im dargestellten Ausführungsbeispiel weist die Korrigiervorrichtung 72 Versatzaktoren 64 und Verkippungsaktoren 66 auf, mittels welcher der mit Bezug zu Figur 6 beschriebene Versatz ΔX und ΔY und ΔZ und die Verkippung α der Basisplatte 24 einstellbar sind.

## Patentansprüche

1. Verfahren zum Herstellen eines Silikonelastomerteils (22) unter Einsatz einer 3D-Druckvorrichtung (10) mit zumindest einem Druckkopf (12), der zumindest eine Austragevorrichtung (14) aufweist, die eingerichtet ist, um Druckmassen an Soll-Positionen zu setzen, um Silikonelastomerteile (22) generativ zu erzeugen, wobei die 3D-Druckvorrichtung (10) ein System (21) mit zumindest einer konfokalen Messvorrichtung (20) aufweist, das dazu eingerichtet ist, mittels chromatisch-konfokaler Abstandsmessung berührungslos einen Abstand des Druckkopfs (12) zu einer Oberfläche zu bestimmen, auf der zu druckende Druckmassen gedruckt werden können, wobei das System (21) eine Lichtquelle (50) umfasst, die polychromatisches Licht aussendet und die konfokale Messvorrichtung (20) eine Linsenanordnung (54) umfasst, bei welcher eine oder mehrere Linsen konfokal angeordnet sind, und die so ausgestaltet ist, dass das Licht der Lichtquelle (50) in seine monochromatischen Wellenlängen zerlegt wird,
wobei mittels des zumindest eine konfokale Messvorrichtung (20) aufweisenden Systems (21) während eines Druckvorgangs mittels chromatisch-konfokaler Abstandsmessung berührungslos ein Abstand des Druckkopfs zu einer Oberfläche bestimmt wird, auf der zu druckende Druckmassen gedruckt werden können oder
wobei in einem Scanschritt mittels des die konfokale Messvorrichtung (20) aufweisenden Systems (21) vor dem Druckvorgang mittels chromatisch-konfokaler Abstandsmessung berührungslos die Lage einer Oberfläche, auf die zu druckende Druckmassen gedruckt werden können, bestimmt wird.

2. Verfahren nach Anspruch 1, **dadurch gekennzeichnet, dass** Druckfehler, insbesondere nicht gedruckte Druckmassen und Fremdmaterialablagerungen erkannt und korrigiert und/oder berichtet und/oder protokolliert werden,

3. Verfahren nach einem der Anspruche 1 oder 2, **dadurch gekennzeichnet, dass** die 3D-Druckvorrichtung (10) anhand des berührungslos bestimmten Abstands des Druckkopfes (12) zur Oberfläche, auf der zu druckende Druckmassen gedruckt werden können, kalibriert wird.

4. Verfahren nach einem der Anspruche 1 bis 3, **dadurch gekennzeichnet, dass** in dem Scanschritt vor dem Druckvorgang berührungslos die Lage der Oberflache bestimmt wird, auf welche die zu druckenden Druckmassen gedruckt werden können, und dass ein CAD-Modell der ermittelten Oberflache erstellt wird.

5. Verfahren nach einem der Ansprüche 1 bis 4, **dadurch gekennzeichnet, dass** zumindest ein Fremdbauteil (44) auf einer Basisplatte (24) oder auf einer gedruckten Schicht (48) angeordnet wird, wobei die Lage der bedruckbaren Oberfläche des Fremdbauteils (44) durch das System (21) mit der konfokalen Messvorrichtung (20) ermittelt wird

6. Verfahren nach einem der Anspruche 1 bis 5, **dadurch gekennzeichnet, dass** nach einem Druckvorgang mittels des Systems (21) mit der konfokalen Messvorrichtung (20) außerdem nach einem Druckvorgang die Positionen gedruckter Druckmassen berührungslos bestimmt werden.

7. Verfahren nach einem der Anspruche 1 bis 6, **dadurch gekennzeichnet, dass** anhand der Daten des die konfokale Messvorrichtung (20) aufweisenden Systems (21) qualitätsbestimmende Kennzahlen des gedruckten Silikonelastomerteils (22) bestimmt und ausgegeben werden, insbesondere die Oberflächenrauhigkeit, die Oberflächentextur, die Lage und Ebenheitstoleranzen

8. Verfahren nach einem der Ansprüche 1 bis 7, **dadurch gekennzeichnet, dass** auf Schichten gedruckt wird, die zumindest teilweise aus transparenter Druckmasse gebildet sind.

## Claims

1. Method of producing a silicone elastomer part (22) using a 3D printing device (10) having at least one printhead (12) having at least one discharge device (14) set up to replace print materials at target positions in order to additively manufacture silicone elastomer parts (22), wherein the 3D print device (10) includes a system (21) having at least one confocal measurement device (20) set up to contactlessly determine, by means of chromatic confocal distance measurement, a distance of the printhead (12) from a surface on which print materials to be printed can be printed, wherein the system (21) comprises a light source (50) that emits polychromatic light and the confocal measurement device (20) comprises a lens arrangement (54) in which one or more lenses are arranged confocally, and which is configured such that the light from the light source (50) is divided into its monochromatic wavelengths,
wherein, by means of the system (21) having at least one confocal measurement device (20), during a printing operation, by means of chromatic confocal distance measurement, a distance of the printhead from a surface on which print materials to be printed can be printed is determined contactlessly, or
wherein, in a scanning step, by means of the system (21) having the confocal measurement device (20), prior to the printing operation, by means of chromatic confocal distance measurement, the position of a surface on which print materials to be printed can be printed is determined contactlessly.

2. Method according to Claim 1, **characterized in that** print errors, especially unprinted print materials and extraneous material deposits, are recognized and corrected and/or reported and/or recorded.

3. Method according to either of Claims 1 and 2, **characterized in that** the 3D printing device (10) is calibrated using the contactlessly determined distance of the printhead (12) from the surface on which print materials to be printed can be printed.

4. Method according to any of Claims 1 to 3, **characterized in that**, in the scanning step, prior to the printing operation, the position of the surface onto which the print materials to be printed can be printed is determined contactlessly, and **in that** a CAD model of the surface ascertained is created.

5. Method according to any of Claims 1 to 4, **characterized in that** at least an extraneous component (44) is disposed on a baseplate (24) or on a printed layer (48), the position of the printable surface of the extraneous component (44) being ascertained by the system (21) with the confocal measurement device (20).

6. Method according to any of Claims 1 to 5, **characterized in that**, after a printing operation, by means of the system (21) with the confocal measurement device (20), the positions of printed print materials are also determined contactlessly after a printing operation.

7. Method according to any of Claims 1 to 6, **characterized in that** the data from the system (21) having the confocal measurement device (20) are used to determine and express quality-determining indices of the printed silicone elastomer part (22), especially surface roughness, surface texture, position and flatness tolerances.

8. Method according to any of Claims 1 to 7, **characterized in that** material is printed onto layers at least partly formed from transparent print material.

## Revendications

1. Procédé de fabrication d'une pièce en élastomère de silicone (22) par utilisation d'un dispositif d'impression 3D (10) avec au moins une tête d'impression (12), qui présente au moins un dispositif de dépôt (14), qui est conçu pour placer des masses d'impression à des positions de consigne afin de produire des pièces en élastomère de silicone (22) par voie générative, dans lequel le dispositif d'impression 3D (10) présente un système (21) avec au moins un dispositif de mesure confocal (20), qui est conçu pour déterminer sans contact par mesure de distance chromatique confocale une distance de la tête d'impression (12) à une surface, sur laquelle des masses d'impression à imprimer peuvent être imprimées,
dans lequel le système (21) comprend une source de lumière (50), qui émet une lumière polychromatique et le dispositif de mesure confocal (20) comprend un agencement de lentille(s) (54) dans lequel une ou plusieurs lentille(s) est/sont disposée(s) de façon confocale, et qui est configuré de telle manière que la lumière de la source de lumière (50) soit décomposée en ses longueurs d'onde monochromatiques,
dans lequel on détermine sans contact au moyen du système (21) présentant au moins un dispositif de mesure confocal (20) pendant une opération d'impression par une mesure de distance chromatique confocale une distance de la tête d'impression à une surface, sur laquelle des masses d'impression à imprimer peuvent être imprimées, ou
dans lequel on détermine sans contact, dans une étape de balayage au moyen du système (21) présentant le dispositif de mesure confocal (20), avant l'opération d'impression par une mesure de distance chromatique confocale la position d'une surface, sur laquelle des masses d'impression à imprimer peuvent être imprimées.

2. Procédé selon la revendication 1, **caractérisé en ce que** l'on détecte et on corrige et/ou on rectifie et/ou on enregistre des défauts d'impression, en particulier des masses d'impression non imprimées et des dépôts de matière étrangère.

3. Procédé selon une des revendications 1 ou 2, **caractérisé en ce que** l'on calibre le dispositif d'impression 3D (10) à l'aide de la distance déterminée sans contact de la tête d'impression (12) à la surface, sur laquelle des masses d'impression à imprimer peuvent être imprimées.

4. Procédé selon l'une quelconque des revendications 1 à 3, caractérisé en ce l'on détermine sans contact à l'étape de balayage avant l'opération d'impression la position de la surface, sur laquelle les masses d'impression à imprimer peuvent être imprimées, et en ce que l'on établit un modèle CAD de la surface déterminée.

5. Procédé selon l'une quelconque des revendications 1 à 4, caractérisé en ce l'on dispose au moins un composant étranger (44) sur une plaque de base (24) ou sur une couche imprimée (48), dans lequel on détermine la position de la surface imprimable du composant étranger (44) au moyen du système (21) avec le dispositif de mesure confocal (20).

6. Procédé selon l'une quelconque des revendications 1 à 5, **caractérisé en ce que** l'on détermine sans contact après une opération d'impression au moyen du système (21) avec le dispositif de mesure confocal (20) aussi après une opération d'impression les positions de masses d'impression imprimées.

7. Procédé selon l'une quelconque des revendications 1 à 6, **caractérisé en ce que** l'on détermine et on produit, à l'aide des données du système (21) présentant le dispositif de mesure confocal (20), des indicateurs déterminant la qualité de la pièce imprimée en élastomère de silicone (22), en particulier la rugosité de surface, la texture de surface, la position et les tolérances de planéité.

8. Procédé selon l'une quelconque des revendications 1 à 7, **caractérisé en ce que** l'on imprime sur des couches, qui sont formées au moins en partie de masse d'impression transparente.
